# EUROPÄISCHE PATENTSCHRIFT

(11) **EP 3 356 814 B1**
(45) Veröffentlichungstag und Bekanntmachung des Hinweises auf die Patenterteilung: **17.07.2019**
(21) Anmeldenummer: 16766526.4
(22) Anmeldetag: 12.09.2016
(51) Int. Cl.: G01N 29/14, G01N 15/02

(54) **VERFAHREN ZUM BESTIMMEN DER KORNGRÖSSENVERTEILUNG VON GRANULATEN IN EINEM FÖRDERSTROM UND VORRICHTUNGEN ZUR DURCHFÜHRUNG DER VERFAHREN**
METHODS FOR DETERMINING THE PARTICLE SIZE DISTRIBUTION OF GRANULAR MATERIAL IN A DELIVERY FLOW, AND DEVICES FOR CARRYING OUT THE METHODS
PROCÉDÉS PERMETTANT DE DÉTERMINER LA DISTRIBUTION GRANULOMÉTRIQUE DE GRANULÉS DANS UN FLUX DE TRANSPORT ET DISPOSITIFS POUR LA MISE EN OEUVRE DESDITS PROCÉDÉS

(30) Priorität: 28.09.2015 DE 102015116379
(43) Veröffentlichungstag der Anmeldung: 08.08.2018
(73) Patentinhaber: TIPCO Tudeshki Industrial Process Control GmbH, 52064 Aachen (DE)
(72) Erfinder: TUDESHKI, Kian, 52076 Aachen (DE)
(74) Vertreter: Kohlmann, Kai
(86) Internationale Anmeldenummer: PCT/EP2016/071434
(87) Internationale Veröffentlichungsnummer: WO 2017/055064

(56) Entgegenhaltungen:
- WO-A1-2014/116675
- US-A- 5 257 530
- US-A1- 2008 282 781
- US-A1- 2009 055 104

## Beschreibung

Die Erfindung betrifft ein Verfahren zum kontinuierlichen Bestimmen der Korngrößenverteilung von Granulaten bestehend aus Feststoffpartikeln mit unterschiedlichen Korngrößen, die in einer Förderrichtung in einen Förderstrom transportiert werden und dabei mit mindestens einem als Wellenleiter eingerichteten Anprallkörper kollidieren und akustische Signale erzeugen, die sich in jedem Anprallkörper als Körperschallwellen ausbreiten. Außerdem betrifft die Erfindung eine Vorrichtung zur Durchführung des Verfahrens.

Ein wesentliches Merkmal von Granulaten ist deren Korngrößenverteilung, die in allen Zweigen der Industrie als ein messbarer Parameter zur Prozessüberwachung, Qualitätskontrolle, Qualitätssteuerung, Maschinen- und Anlagenüberwachung und Maschinen- und Anlagensteuerung herangezogen wird.

Granulate werden bei der Umlagerung, Produktion oder Verwendung mit unterschiedlichen Transportsystemen transportiert, wobei der Transport in der Regel als Förderstrom hydraulisch, z.B. als Feststoff-Wasser-Gemisch, pneumatisch, z.B. als Feststoff-Luft-Gemisch, mittels Bandanalgen oder teilweise im freien Fall erfolgt. Die Entwicklung eines Verfahrens und einer Vorrichtung, die in allen Förderströmen für ein breites Kornspektrum von einigen Mikrometern bis zu einigen Dezimetern, eine Korngrößenanalyse in Echtzeit erlaubt, ist für eine Vielzahl von Industriezweigen von besonderer Bedeutung.

Eine Vielzahl von Untersuchungen und Entwicklungsbestrebungen konzentrieren sich auf die Nutzung der Akustik zur Analyse von Granulaten, hauptsächlich in Suspensionsform während des hydraulischen Transports.

Unterschieden wird zwischen aktiven und passiven akustischen Verfahren:
Ein aktives Verfahren liegt vor, wenn von einem Sender ein aktives akustisches Signal gesendet und von einem Empfänger empfangen wird. Dabei wird die, infolge der Kollision zwischen der akustischen Welle und den Feststoffpartikeln des Granulats entstehende Dämpfung und/oder die Reflektion desselben für die Signalverarbeitung genutzt. Aktive Verfahren sind in der EP 0801305 A, der WO 03/102550A1 und der US 6,481,268 B1 beschrieben.

Die aktiven akustischen Verfahren liefern nur für die Messung von Suspensionen mit einer sehr geringen Feststoffkonzentration und für ein sehr eng begrenztes und relativ feines Korngrößenspektrum sinnvolle Ergebnisse.

Ein passives akustisches Verfahren liegt vor, wenn akustische Signale für die Signalverarbeitung genutzt werden, die während des Transports des Granulats durch eine Kollision von Feststoffpartikeln des Granulats mit einer Vorrichtung, wie einer Sonde (Anprallkörper), oder einem Teil des Transportsystems, wie beispielsweise einer Rohrwandung, entstehen.

Passiven Verfahren sind in der US 5,257,530 B und der WO 2014 /116675 A1 beschrieben:
Die US 5,257,530 B offenbart eine metallische Sonde, die quer zur Förderrichtung einer Suspension in einer Leitung angeordnet ist, so dass die Feststoffpartikel mit der Sonde kollidieren. An der Sonde ist außerhalb der Leitung ein Beschleunigungsaufnehmer angebracht, der die akustischen Signale aufnimmt. Die verstärkten akustischen Signale werden zu einer Signalverarbeitungseinheit übertragen. Im Rahmen der Signalverarbeitung wird nach einer FFT-Analyse (Fast Fourier Transformation) aus der Signalenergie und Signalintensität auf die Konzentration der Feststoffpartikel in der Suspension geschlossen. In erster Linie dient das Verfahren zur Bestimmung der Konzentration und Masse von Sand in eine Öl- oder Gasstrom.

Die WO 2014/116675 A1 offenbart einen als Wellenleiter eingerichteten Anprallkörper, der quer zur Förderrichtung einer Suspension in einer Leitung angeordnet ist, so dass die Feststoffpartikel mit dem Anprallkörper kollidieren. An der Sonde ist außerhalb der Leitung ein akustischer Wandler angebracht, der die akustischen Signale aufnimmt. Die akustischen Signale werden zu einer Signalverarbeitungseinheit übertragen. Im Rahmen der Signalverarbeitung soll auf die Korngrößenverteilung der Feststoffpartikel in der Suspension geschlossen werden. Die akustischen Signale werden mit einer Abtastfrequenz von beispielsweise 250 Hz abgetastet. Für jedes abgetastete Signal wird im Wege einer DFFT (Discrete Fast Fourier Transformation) das Frequenzspektrum transformiert und daraus die PDS (Power Density Spectrum) erzeugt, d.h. die Schalleistungsdichte bzw. Signalintensität. Eine Änderung der Steigung der Signalintensität im Frequenzbereich 100 kHz bis 1 MHz sowie die Änderung der Signalintensität für eine bevorzugte Frequenz im Frequenzbereich größer als 20 kHz dienen zur Bestimmung der Korngröße der Feststoffpartikel in der Suspension.

Eine Überprüfung der Messergenbisse hat ergeben, dass die bekannten passiven akustischen Verfahren keine repräsentativen Messergebnisse bei der Messung der Korngrößenverteilung von granularen Materialien in Echtzeit liefern.

Ferner ist aus der US 2008/282781 A1 eine Vorrichtung und ein Verfahren zur Überwachung von Formationssand in leitungsgebundenen Öl- und Gasförderströmen bekannt. Der Sand ruft in den Leitungen, insbesondere deren Krümmungen Erosionsverschleiß hervor. Der Erosionsverschleiß wird üblicherweise mit einem elektrischen Widerstandssensor erfasst. Um außerdem die Menge des Formationssandes in dem Förderstrom zu messen und mit dem Erosionsverschleiß zu korrelieren. Um neben dem Erosionsverschleiß die Partikelmenge und deren Einfluss auf den Erosionsverschleiß erfassen zu können wird in D1 eine Sonde vorgeschlagen, die ein von einem Gehäuse entkoppeltes Detektorelement auf weist, das eine Anprallfläche, einen an die Anprallfläche gekoppelten akustischen Sensor und den elektrischen Widerstandssensor zur Erfassung des Erosionsverschleißes aufweist. Der Akustiksensor dient zur Erfassung der Partikelmenge, in dem die Anzahl der Kollisionen der Partikel an der Anprallfläche gezählt wird. Die Sonde kann darüber hinaus Mittel zur Erfassung der Strömungsenergie aufweisen. Die Strömungsenergie des Förderstroms wird mittels eines Differenzdruckwandlers erfasst. Um die Anzahl der Partikel in einem bestimmten Größenbereich zu ermitteln, die auf die Anprallfläche auftreffen, müssen die akustischen Energiesignale der Partikel mit der aus der Strömungsenergie abgeleiteten Fließgeschwindigkeit unter der Annahme konstanter Dichte korreliert werden. Die Korrelation zwischen den akustischen Energiesignalen der auftreffenden Partikel sowie der qualitativen Änderungen der Fließgeschwindigkeit dient dem Zweck, die Anzahl der Partikel in dem bestimmten Größenbereich mit dem Erosionsverschleiß bei einem gegebenen Geschwindigkeitsprofil des Förderstroms zu korrelieren.

Der Erfindung liegt daher die Aufgabe zugrunde ein passives akustisches Verfahren vorzuschlagen, mit dem repräsentative Messergebnisse bei der Messung der Korngrößenverteilung von granularen Materialien in Echtzeit erzielt werden. Außerdem soll eine Vorrichtung zur Durchführung des Verfahrens vorgeschlagen werden.

Die Lösung dieser Aufgabe basiert auf der Nutzung der Erkenntnis, dass das akustische Signal hinsichtlich seiner Charakteristik von der Korngrößenverteilung und der Strömungsenergie des Förderstroms abhängt. Die Strömungsenergie wird durch die Geschwindigkeit und Konzentration bzw. Schüttdichte der Feststoffpartikel des Granulats bestimmt. Um in Echtzeit zuverlässige Messergebnisse zur Korngrößenverteilung zu erhalten, wird erfindungsgemäß die Strömungsenergie des Förderstroms derart gesteuert, dass diese konstant gehalten wird und die Feststoffpartikel in dem Förderstrom mit konstanter Strömungsenergie mit dem Anprallkörper kollidieren. Durch die gezielte Steuerung der Strömungsenergie ist es möglich, eine Korngrößenanalyse von Granulaten in Echtzeit mit einem sehr breiten Kornspektrum von einigen Mikrometern bis einigen Dezimetern in jeglicher Art von Förderströmen, basierend auf einem passiven akustischen Verfahren durchzuführen.

In einer ersten Ausführungsform des erfindungsgemäßen Verfahrens nach Anspruch 1, insbesondere für Labormessungen, wird die Strömungsenergie dadurch konstant gehalten, dass ein Behälter diskontinuierlich mit einer konstanten Menge der Feststoffpartikel als disperse Phase und einer konstanten Menge eines flüssigen Dispersionsmediums befüllt wird und die Dispersion in eine Drehbewegung mit konstanter Geschwindigkeit versetzt wird. Die Feststoffpartikel in der Dispersion kollidieren mit konstanter Strömungsenergie, d.h. konstanter Geschwindigkeit und Konzentration mit einem vorzugsweise stabförmigen Anprallkörper, der außermittig in dem Behälter vorzugsweise höhenverstellbar angeordnet ist.

In einer zweiten Ausführungsform des erfindungsgemäßen Verfahrens nach Anspruch 2 wird die Strömungsenergie dadurch konstant gehalten, dass die Feststoffpartikel als disperse Phase in einer Mischkammer einer Dispergiereinheit kontinuierlich mit einem gasförmigen, mit konstantem Volumenstrom der Mischkammer zugeführten Dispersionsmedium gemischt werden und der Auslass der Dispergiereinheit für die Dispersion auf den Anprallkörper ausgerichtet ist. Die Dispergiereinheit arbeitet wie eine Strahlpumpe, in der das der Mischkammer zugeführte, gasförmige Dispersionsmedium durch Impulsaustausch die disperse Phase ansaugt, beschleunigt und in Richtung des Auslasses zu dem Anprallkörper fördert. Das Dispersionsmedium wird der Mischkammer mit konstantem Volumenstrom zugeführt. Infolge dessen ist die Saugleistung der Dispergiereinheit konstant, wodurch die disperse Phase bei gleichbleibenden Ansaugbedingungen an der Saugseite der Dispergiereinheit mit konstanter Geschwindigkeit und Konzentration, d.h. konstanter Strömungsenergie in Richtung des Anprallkörpers gefördert werden kann.

Das Dispergieren mit der Dispergiereinheit kann kontinuierlich oder diskontinuierlich erfolgen:
Zur Verwendung der Dispergiereinheit im diskontinuierlichen Betrieb, insbesondere für Laboruntersuchungen, saugt die Dispergiereinheit die Feststoffpartikel über eine mit der Mischkammer verbundene Saugvorrichtung an, wobei eine Einlassöffnung der Saugvorrichtung mit konstanter Geschwindigkeit und konstantem Abstand relativ zu einer gleichmäßig mit Feststoffpartikeln befüllten rinnenartigen Vertiefungen in Richtung von deren Längserstreckung bewegt wird. Hierdurch werden gleichbleibende Ansaugbedingungen für die disperse Phase mit Hilfe der Saugvorrichtung gewährleistet. Vorzugsweise wird die Oberfläche der von der Rinne aufgenommen Feststoffpartikel vor Inbetriebnahme der Dispergiereinheit beispielsweise mit einem Abstreifer geglättet.

Eine weitere Möglichkeit zum diskontinuierlichen Betrieb der Dispergiereinheit besteht darin, dass die Saugseite der Dispergiereinheit über eine Leitung mit einem Behälter verbunden ist, der diskontinuierlich mit einer zuvor festgelegten Menge der Feststoffpartikel befüllt wird. Die diskontinuierliche Befüllung des Behälters erfolgt vorzugsweise dadurch, dass die festgelegte Menge der Feststoffpartikel einem Förderstrom von Feststoffpartikeln in einem pneumatischen Strömungsförderer mit konstanter Geschwindigkeit und über einen festgelegten Zeitraum entnommen wird. Eine derartige Anordnung ermöglicht es, einen Teilstrom der Feststoffpartikel aus einem pneumatischen Strömungsförderer diskontinuierlich abzuzweigen, in dem Behälter zu beruhigen und die definierte Menge an Feststoffpartikeln unter konstanten Strömungsbedingungen mit Hilfe der Dispergiereinheit dem Anprallkörper und dem Schwingungsaufnehmer zuzuführen. Um Entsorgungsprobleme hinsichtlich der dem pneumatischen Strömungsförderer entnommenen Feststoffpartikel zu vermeiden, wird die entnommene Menge der Feststoffpartikel nach dem Erfassen der akustischen Signale dem pneumatischen Strömungsförderer vorzugsweise wieder zugeführt.

Für einen kontinuierlichen Betrieb der Dispergiereinheit werden in einer Ausgestaltung der Erfindung die Feststoffpartikel aus einem kontinuierlichen Massenstrom von Feststoffpartikeln, insbesondere von einem Bandförderer, mit einer ortsfesten Saugvorrichtung entnommen. Um Höhenschwankungen des Massenstroms auf dem Bandförderer auszugleichen, weist die Saugvorrichtung einen an einer Saugleitung angeordneten Saugkopf auf, der während des Betriebs des Bandförderers auf der Oberfläche des Massenstroms schwimmt und unter gleichmäßigen Bedingungen die disperse Phase ansaugt.

Sofern die Korngrößenverteilung von Feststoffpartikeln bestimmt werden soll, die auf einem Stetigförderer, insbesondere einem Bandförderer gefördert werden, kann die Steuerung der Strömungsenergie des Förderstroms in einer dritten Ausführungsform der Erfindung nach Anspruch 7 auf besonders einfache Art und Weise dadurch konstant gehalten werden, dass der Förderstrom von Feststoffpartikeln auf dem Förderer mit Hilfe eines gestellfest an dem Rahmen des Förderers angeordneten Abstreifers konstant gehalten wird. Um unter sämtlichen Betriebsbedingungen dem Anprallkörper den Förderstrom mit konstanter Strömungsenergie zuzuführen, wird der Abstreifer gestellfest in einer Höhe angebracht, dass er unter Berücksichtigung der maximal zu erwartenden Höhenschwankungen des Förderstroms vor dem Abstreifer stets auf dessen Oberfläche aufliegt. Der mindestens eine, vorzugsweise stabförmige Anprallkörper taucht in einem möglichst geringen Abstand hinter dem Abstreifer in den Förderstrom ein und überträgt die akustischen Signale in Richtung der oberen Stirnseite des stabförmigen Anprallkörpers, an der der Schwingungsaufnehmer befestigt ist.

Alternativ kann mindestens ein Anprallkörper hinter einer Übergabe des Förderers in dem freifallenden Förderstrom des Bandförderers angeordnet sein. Der Abstreifer ist in diesem Fall vorzugsweise in geringem Abstand entgegen der Förderrichtung vor der Übergabe montiert.

Sofern die Korngrößenverteilung von Feststoffpartikeln aus einem hydraulischen Strömungsförderer diskontinuierlich bestimmt werden soll, erfolgt dies vorzugsweise mit einem Verfahren mit den Merkmalen der Ansprüche 10 und 11. Das konstante Volumen der Dispersion wird dem Förderstrom in dem hydraulischen Strömungsförderer mit konstanter Geschwindigkeit und über einen festgelegten Zeitraum vorzugsweise mit einer Pumpe entnommen, die saugseitig an die Rohrleitung des Strömungsförderers und auslassseitig an den Behälter mit Rührwerk angeschlossen ist. Um eine Entsorgung der entnommenen Menge der Dispersion nach dem Erfassen der akustischen Signale zu vermeiden, wird die entnommene Menge der Dispersion nach dem Erfassen der akustischen Signale dem hydraulischen Strömungsförderer wieder zugeführt.

In sämtlichen zuvor beschriebenen Verfahren, bei denen die Strömungsenergie des Förderstroms mit einer Dispergiereinheit konstant gehalten wird, werden die akustischen Signale vorzugsweise mit einem piezoelektrischen Beschleunigungssensor mit einer neutralen Achse erfasst. Als neutrale Achse des Beschleunigungssensors wird diejenige Achse bezeichnet, in der die erzeugte Ladungsmenge direkt proportional zu der Krafteinwirkung auf das piezoelektrische Element ist.

In einer vorteilhaften Ausgestaltung der Erfindung wird der Beschleunigungssensor derart angeordnet, dass die neutrale bzw. piezoelektrische Achse mit der Förderrichtung des Granulats im Augenblick des Anpralls an dem Anprallkörper übereinstimmt. Die im Stand der Technik übliche orthogonale Anordnung der neutralen Achse zur Förderrichtung hat zur Folge, dass sich die Körperschallwellen in dem Anprallkörper in erster Linie als transversale Wellen in Richtung der neutralen Achse des Sensors ausbreiten. Die geringe Geschwindigkeit der transversalen Wellen und deren orthogonale Ausbreitungsrichtung führen im Stand der Technik zu Signalverzerrungen und Fehlinterpretationen der Signale.

Vorzugsweise wird der Beschleunigungssensor derart an dem Anprallkörper befestigt, dass sich die Körperschallwellen in dem Anprallkörper in erster Linie als Longitudinalwellen in Richtung der neutralen Achse des Beschleunigungssensors ausbreiten. Hierdurch erreichen die Körperschallwellen auf dem kürzesten Wege und ohne Verzerrungen den Beschleunigungssensor.

In weiterer Ausgestaltung des erfindungsgemäßen Verfahrens wird jeder Anprallkörper schwingungsisoliert in dem Förderstrom gehalten. Die Schwingungsisolation zwischen dem Anprallkörper und der Halterung reduziert den Einfluss von Fremdschwingungen auf den Anprallkörper und den daran befestigtem Schwingungsaufnehmer, insbesondere werden Veränderungen der Signalintensität und Frequenzverschiebungen weitgehend vermieden.

Zur weiteren Verbesserung der Signalqualität und Reproduzierbarkeit der Erfassung der akustischen Signale wird der Beschleunigungssensor mittels einer Schraubverbindung lösbar mit dem Anprallkörper verbunden. Hierdurch wird ein dauerhaft bestmöglicher Kontakt zu dem Anprallkörper gewährleistet. Eine Veränderung des Kontaktes zwischen dem Beschleunigungssensor und dem Anprallkörper in Folge dynamischer Schwingungen, von Witterungseinflüssen und Alterung sowie eine damit einhergehende Beeinträchtigung der Signaleigenschaften wird vermieden. Zusätzlich zu der Verschraubung kann der Sensor mit dem Anprallkörper mechanisch arretiert werden.

Das Verfahren zum Bestimmen der Korngrößenverteilung setzt vor Aufnahme des Regelbetriebs der Signalverarbeitung eine vorherige Kalibrierung voraus, in dem eine Korrelation zwischen den elektrischen Signalen jedes Schwingungsaufnehmers und der mit einer herkömmlichen Methode zur Bestimmung der Korngrößenverteilung bestimmten Korngrößenverteilung des Granulats ermittelt wird. Als herkömmliche Methode kommt beispielsweise eine Siebklassierung einer Probe aus dem Förderstrom in Betracht, zu dem auch die im Zeitraum der Probennahme erfassten elektrische Signale des Schwingungsaufnehmers vorliegen.

Im anschließenden Regelbetrieb der Signalverarbeitung wird die Korngrößenverteilung durch Anwenden der Kalibrierfunktion auf die von dem Schwingungsaufnehmer erfassten elektrischen Signale ermittelt.

Ein vorteilhaftes Verfahren zur Kalibrierung und Signalverarbeitung, das auf einer Signalklassierung beruht, ergibt sich aus den Merkmalen der Ansprüche 13 und 14. Abweichend zum Stand der Technik benötigt das Signalverarbeitungsverfahren keine Transformation der Signale aus dem Bereich der Fourier-Analysis.

Eine Vorrichtung zur Durchführung des Verfahrens nach Anspruch 1 ergibt sich aus den Merkmalen des Anspruchs 17. Um die Strömungsenergie konstant zu halten weist die Vorrichtung als Steuerungsmittel einen Antrieb für das Rührwerkzeug auf, der zur Erzeugung einer Drehbewegung der Dispersion mit konstanter Geschwindigkeit bei bekannter Menge an Feststoffpartikeln und flüssigem Dispersionsmedium eingerichtet ist.

Soweit die Strömungsenergie mit einer Dispergiereinheit konstant gehalten wird, weist diese eine Mischkammer, einen Einlass für das gasförmige Dispersionsmedium in die Mischkammer, einen Einlass für die Feststoffpartikel als disperse Phase und einen Auslass für die Dispersion auf, wobei der Auslass auf den Anprallkörper ausgerichtet ist und der Einlass mit einer Zufuhr für das Dispersionsmedium verbunden ist, die zum Zuführen des Dispersionsmediums mit konstantem Volumenstrom eingerichtet ist. In Betracht kommt beispielsweise ein mit konstantem Druck betriebenes Druckluftnetz oder die Zufuhr des Dispersionsmediums aus einem Druckbehälter. An dem Einlass für das gasförmige Dispersionsmedium ist vorzugsweise eine im Inneren der Mischkammer mündende Treibdüse für das Dispersionsmedium angeordnet ist.

Die vorstehend beschriebene Dispergiereinheit ist äußerst einfach aufgebaut und besitzt keinerlei bewegte Teile. Sie ist daher für den vorliegenden Einsatzzweck aufgrund Ihrer Robustheit und Wartungsarmut besonders geeignet.

Sofern die Dispergiereinheit für eine diskontinuierliche Bestimmung der Korngrößenverteilung von Feststoffpartikeln im Rahmen von Laboruntersuchungen eingesetzt werden soll, ist die Vorrichtung vorzugsweise entsprechend den Merkmalen des Anspruchs 19 ausgestaltet.

Sofern die Dispergiereinheit für eine kontinuierliche Bestimmung der Korngrößenverteilung von Feststoffpartikeln, die dem Massestrom eines Stetigförderers entnommen werden, eingesetzt werden soll, ist die Vorrichtung vorzugsweise entsprechend den Merkmalen des Anspruchs 20 ausgestaltet.

Sofern die Dispergiereinheit für eine diskontinuierliche Bestimmung der Korngrößenverteilung von Feststoffpartikeln, die einem pneumatischen Strömungsförderer entnommen werden, eingesetzt werden soll, ist die Vorrichtung vorzugsweise entsprechend den Merkmalen der Ansprüche 21 und 22 ausgestaltet.

Sofern die Fördereinrichtung für die Feststoffpartikel ein Bandförderer ist, kann die Strömungsenergie des Förderstroms auf einfache Art und Weise mit einem gestellfest an dem Bandförderer angeordneten Abstreifer konstant gehalten werden. Jeder Anprallkörper ist vorzugsweise in Förderrichtung unmittelbar hinter dem Abstreifer angeordnet oder in Förderrichtung hinter der Übergabe des Förderers, sodass die Feststoffpartikel des an der Übergabe frei fallenden Förderstroms mit jedem Anprallkörper kollidieren.

Sofern diskontinuierlich die Korngrößenverteilung von Feststoffpartikeln, die einem hydraulischen Strömungsförderer entnommen werden, bestimmt werden soll, ist die Vorrichtung vorzugsweise entsprechend den Merkmalen des Anspruchs 24 ausgestaltet. Die Saugseite der ersten Pumpe ist an die Rohrleitung des hydraulischen Strömungsförderers und die Druckseite an den Behälter angeschlossen. Der Behälter ist über einen bodenseitigen Auslass mit der Saugseite einer zweiten steuerbaren Pumpe verbunden, die zum diskontinuierlichen Entleeren des Behälters eingerichtet ist, und die Druckseite der zweiten steuerbaren Pumpe ist über eine Rückführleitung mit dem hydraulischen Strömungsförderer verbunden.

Die Vorrichtung zum Bestimmen der Korngrößenverteilung umfasst vorzugsweise
- einen Anprallkörper mit einem Halteteil und einem Kollisionsteil, wobei der Anprallkörper zur Erzeugung akustischer Signale durch Anprall von Feststoffpartikeln eines Granulats an einer Oberfläche des Kollisionsteils eingerichtet ist, die sich als Körperschallwellen in dem Anprallkörper ausbreiten,
- eine Halterung, die zum Halten des Anprallkörpers in einen Förderstrom der in einer Förderrichtung transportierten Feststoffpartikel eingerichtet ist,
- eine zwischen der Halterung und dem Anprallkörper angeordnete Schwingungsisolierung und
- einen an dem Halteteil befestigten Schwingungsaufnehmer, der zum Erfassen der akustischen Signale und zum Umformen in elektrische Signale eingerichtet ist.

Zumindest die für den Anprall der Feststoffpartikel eingerichtete Oberfläche des Kollisionsteils ist in einer ersten Ausführung des Kollisionsteils sphärisch ausgebildet ist. Das Kollisionsteil weist die Form eines Kugelsegmentes und das Halteteil die Form eines geraden Zylinders aufweist, wobei sich der Zylinder senkrecht von der Grundfläche des Kreissegments in Verlängerung von dessen Höhe erstreckt.

Der Schwingungsaufnehmer ist an der Stirnseite des Halteteils befestigt, insbesondere verschraubt.

Die aus einem elastischen Material bestehende Schwingungsisolierung weist einen kreisringförmigen und einen hohlzylindrischen Abschnitt auf, wobei der kreisringförmige Abschnitt flächendeckend auf der Grundfläche des Kollisionsteils und der hohlzylindrische Abschnitt an dem Außenmantel des Halteteils anliegen.

Die Halterung kann einen rohrförmigen Abschnitt aufweisen, der zur bündigen Aufnahme des Halteteils eingerichtet ist. Die Halterung kann außerdem einen zu dem rohrförmigen Abschnitt senkrecht verlaufenden Abschnitt aufweisen.

In einer alternativen Ausführung ist der Anprallkörper als Stab ausgebildet ist, wobei ein erster Teil des Stabes das Kollisionsteil und ein zweiter Teil des Stabes das Halteteil bildet, wobei eine Höhlung in der Halterung zur bündigen Aufnahme des Halteteils eingerichtet ist. Der Schwingungsaufnehmer ist insbesondere an der Stirnseite des Halteteils verschraubt ist. Die aus einem elastischen Material bestehende Schwingungsisolierung umgibt ringförmig das Halteteil.

Der Schwingungsaufnehmer ist vorzugsweise ein piezoelektrischer Beschleunigungssensor.

Nachfolgend wird die Erfindung anhand der Figuren näher erläutert. Es zeigen:
- **Figur 1**: Eine schematische Darstellung einer Messbaugruppe umfassend einen Anprallkörper und einen Schwingungsaufnehmer für akustische Signale.
- **Figur 2**: Eine Vorrichtung zum diskontinuierlichen Bestimmen der Korngrößenverteilung von Feststoffpartikeln im Rahmen von Laboruntersuchungen.
- **Figur 3**: Eine Vorrichtung zum kontinuierlichen Bestimmen der Korngrößenverteilung von Feststoffpartikeln einer Bandanlage.
- **Figur 4**: Eine erste Vorrichtung zum diskontinuierlichen Bestimmen der Korngrößenverteilung von Feststoffpartikeln in einem Rührwerksbehälter.
- **Figur 5**: Eine zweite Vorrichtung zum diskontinuierlichen Bestimmen der Korngrößenverteilung von Feststoffpartikeln in einem Rührwerksbehälter.
- **Figur 6**: Eine Vorrichtung zum kontinuierlichen Bestimmen der Korngrößenverteilung von Feststoffpartikeln hinter der Übergabe einer Bandanlage.
- **Figur 7**: Eine Vorrichtung zum diskontinuierlichen Bestimmen der Korngrößenverteilung von Feststoffpartikeln aus einem pneumatischen Strömungsförderer.
- **Figur 8**: Eine Vorrichtung zum diskontinuierlichen Bestimmen der Korngrößenverteilung von Feststoffpartikeln aus einem hydraulischen Strömungsförderer.
- **Figuren 9a-i**: Darstellungen zur Veranschaulichung der einzelnen Schritte der Erstellung der Kalibrierfunktion sowie des Regelbetriebs.

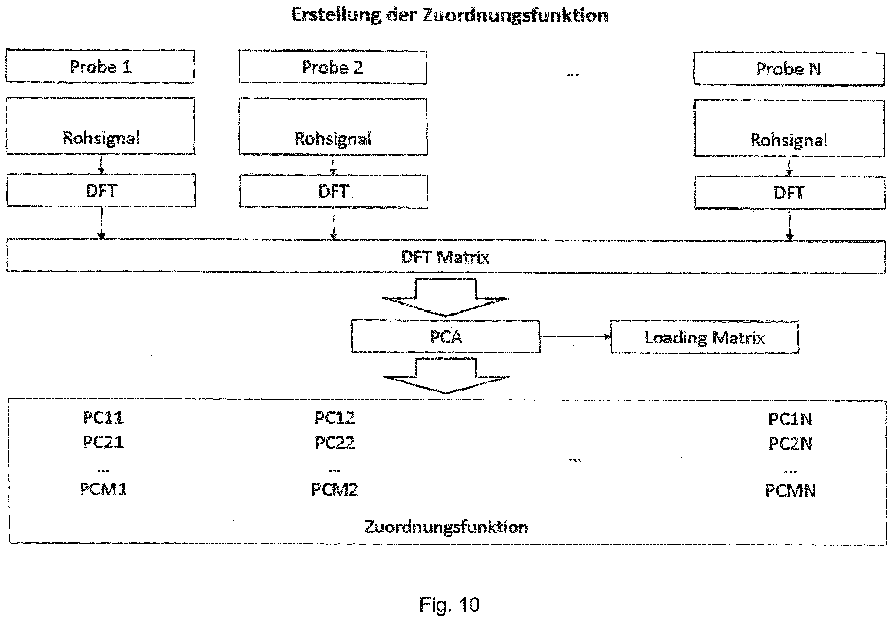

- **Figur 10**: Ein Flussdiagramm zur Veranschaulichung der Erstellung einer Zuordnungsfunktion im Rahmen der Kalibrierung einer Messeinrichtung für eine Korngrößenanalyse eines Granulats mit starken zu erwartenden Schwankungen der Korngrößenverteilung.

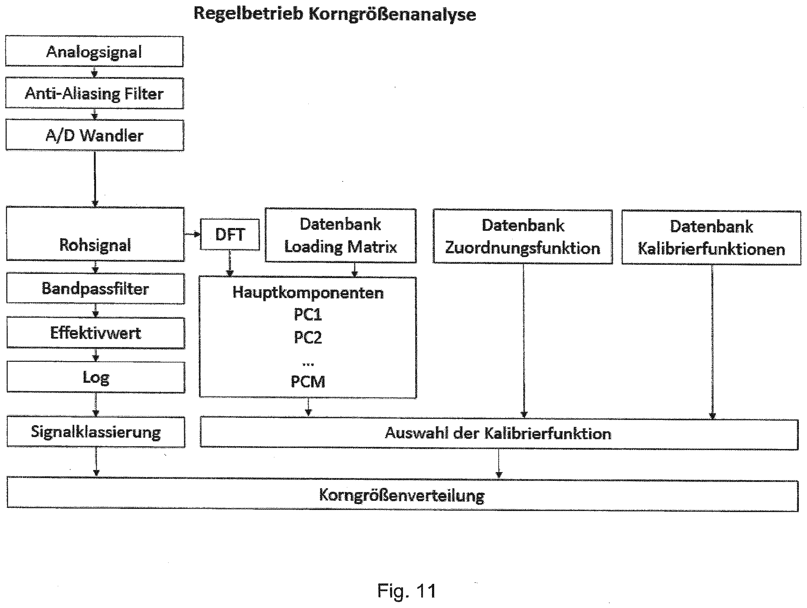

- **Figur 11**: Ein Flussdiagramm zur Veranschaulichung des Regelbetriebs der Korngrößenanalyse eines Granulats mit starken zu erwartenden Schwankungen der Korngrößenverteilung.

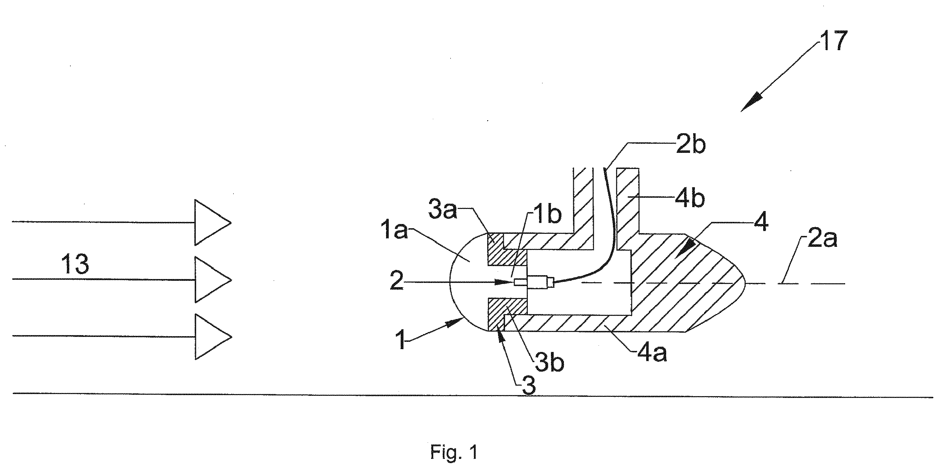

Figur 1 zeigt eine Messeinrichtung (17) zum Bestimmen der Korngrößenverteilung von Granulaten umfassend einen Anprallkörper (1), einen Schwingungsaufnehmer (2), eine Schwingungsisolierung (3) und eine Halterung (4). Die Messeinrichtung wird in einem Förderstrom angeordnet, in dem Feststoffpartikel in einer Förderrichtung (13) transportiert werden.

Der Anprallkörper (1) besteht aus einem metallischen, verschleißfesten Werkstoff, der zur Erzeugung akustischer Signale durch Anprall von Feststoffpartikeln eines Granulats eingerichtet ist, die sich als Körperschallwellen in dem Anprallkörper (1) ausbreiten. Der Anprallkörper (1) weist ein Kollisionsteil (1a) in Form eines Kugelsegmentes und ein Halteteil (1b) in Form eines geraden Kreiszylinders auf, wobei sich der gerade Kreiszylinder senkreckt von der Grundfläche des Kreissegmentes in Verlängerung von dessen Höhe erstreckt. Die sphärische Oberfläche des Kollisionsteils (1a) ist entgegen der Strömungsrichtung (13) orientiert, sodass die Feststoffpartikel ausschließlich mit der sphärischen Oberfläche des Kollisionsteils (1a) kollidieren.

Der als Beschleunigungssensor ausgeführte Schwingungsaufnehmer (2) ist geschützt an der Stirnseite des Halteteils (1b) verschraubt. Das als Kugelsegment ausgeführte Kollisionsteils (1a) verbessert die Signalqualität, insbesondere das Signal-Rauschverhältnis des Schwingungsaufnehmers (2).

Zwischen der Halterung (4) und dem Anprallkörper (1) ist die Schwingungsisolierung (3) aus elastischem Material angeordnet. Die Schwingungsisolierung (3) weist einen kreisringförmigen Abschnitt (3a) und einen hohlzylindrischen Abschnitt (3b) auf, wobei der kreisringförmige Abschnitt (3a) flächendeckend auf der Grundfläche des Kugelsegmentes und der hohlzylindrische Abschnitt (3b) an dem Außenmantel des kreiszylindrischen Halteteils (1b) anliegen.

Die Halterung (4) weist einen unteren rohrförmigen, sich in Strömungsrichtung verjüngenden Abschnitt (4a) auf, der das von der Schwingungsisolierung (3) umgebene zylindrische Halteteil (1b) des Anprallkörpers (1) bündig aufnimmt. Die Halterung (4) weist ferner einen zu dem rohrförmigen Abschnitt (4a) senkrecht verlaufenden, rohrförmigen Abschnitts (4b) auf, der zur Befestigung der Messeinrichtung dient.

Ein wesentlicher Vorteil der in Figur 1 dargestellten Messeinrichtung (17) besteht darin, dass die neutrale Achse (2a) des als Beschleunigungssensor ausgeführten Schwingungsaufnehmers (2) mit der Förderrichtung (13) übereinstimmt. Die durch den Anprall der Feststoffpartikel an dem Kollisionsteil (1a) hervorgerufenen Körperschallwellen breiten sich auf dem kürzesten Weg und ohne Verzerrungen nahezu ausschließlich als Longitudinalwellen in Richtung des Schwingungsaufnehmers (2) aus.

Der Schwingungsaufnehmer (2) ist elektrisch gegenüber dem Anprallkörper isoliert. Die elektrische Isolierung verhindert Signalverzerrungen und damit Fehlinterpretationen der Signale, die bereits bei einem sehr schwachen Stromfluss hervorgerufen durch den Förderstrom und/oder durch Bestandteile der Messeinrichtung auftreten können.

Die von dem Schwingungsaufnehmer (2) in elektrische Signale umgeformten akustischen Signale werden mittels einer Signalleitung (2b) durch das Innere der rohrförmigen Abschnitte (4a,b) zu einer in Figur 1 nicht dargestellten Signalverarbeitungseinheit, beispielweise einem Personal Computer, geführt. In der Signalverarbeitungseinheit werden die elektrischen Signale des Schwingungsaufnehmers (2) verarbeitet, um die Korngrößenverteilung aus den akustischen Signalen zu ermittelten.

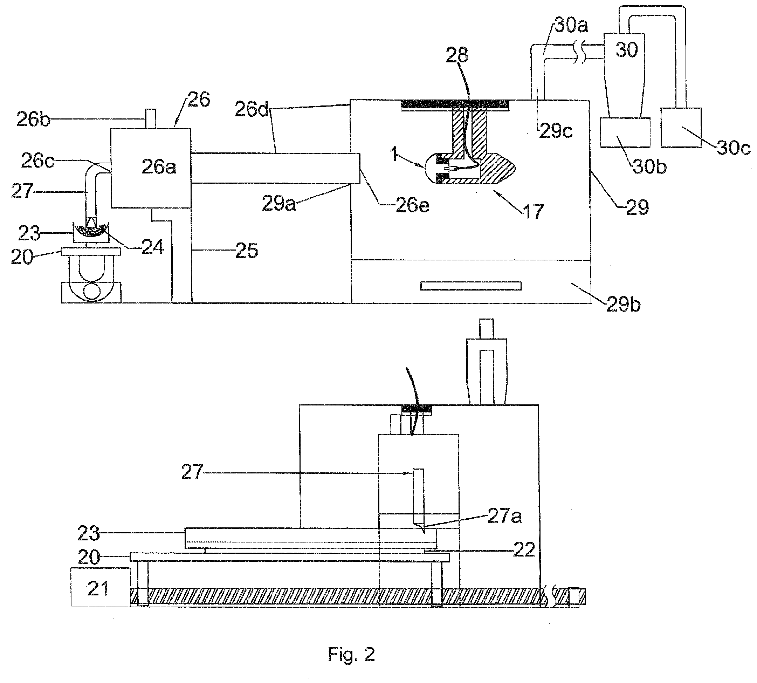

Die Vorrichtung nach Figur 2 umfasst einen horizontal angeordneten Tisch (20), der mittels eines steuerbaren Antriebs (21) mit konstanter Geschwindigkeit linear bewegbar ist. In dem dargestellten Ausführungsbeispiel wird die rotatorische Bewegung eines Motors mithilfe einer Gewindespindel in einer translatorische Bewegung des Tisches (20) umgewandelt. Auf der Oberfläche des Tisches (20) ist eine Halterung (22) zur lösbaren Befestigung einer Rinne (23) zur Aufnahme von Feststoffpartikeln (24) angebracht.

Die Vorrichtung umfasst weiterhin eine auf einer Stütze (25) befestigte Dispergiereinheit (26), die eine Mischkammer (26a), einen Einlass für ein Dispersionsmedium (26b), insbesondere Druckluft, einen Einlass (26c) für die Feststoffpartikel (24) und eine Düse (26d) mit einem Auslass (26e) für die Dispersion aufweist. Über den Einlass (26b) wird die Dispergiereinheit mit Druckluft mit konstantem Druck und Volumenstrom beaufschlagt. An dem Einlass (26c) ist eine Saugvorrichtung (27) mit einer Einlassöffnung (27a) angeschlossen.

Eine Messeinrichtung (17) nach Figur 1 ist an einem Schienensystem (28) längsverschieblich angeordnet, so dass der Abstand zwischen dem Auslass (26e) der Dispergierdüse (26d) und dem Anprallkörper (1) der Messeinrichtung (17) einstellbar ist. Das Schienensystem (28) ist an der Oberseite eines Behälters (29) schwingungsisoliert befestigt. Der Behälter (29) weist in einer Seitenfläche eine Öffnung (29a) auf, durch die die Düse (26d) in das Innere des Behälters (29) ragt. An der Unterseite des Behälters (29) ist ein Auffangbehälter (29b) zu Sammeln des Niederschlages von Feststoffpartikeln (24) angeordnet. An der Oberseite weist der Behälter (29) eine Öffnung (29c) auf. An die Öffnung (29c) ist über eine Leitung (30a) ein Fliehkraftabscheider (Zyklon) (30) angeschlossen, um die Feststoffpartikel (24) aus der Dispersion abzuscheiden. Die abgeschiedenen Feststoffpartikel (24) werden in einen Partikelauffangbehälter (30b) gesammelt. Den erforderlichen Unterdruck hält eine an den Fliehkraftabscheider (30) angeschlossene Saugvorrichtung (30c) aufrecht.

Zum Bestimmen der Korngrößenverteilung der Feststoffpartikel (24) wird die Dispergiereinheit (26) eingeschaltet. Die Feststoffpartikel (24) werden, während der Tisch (20) mit konstanter Geschwindigkeit in Richtung der Längserstreckung der Rinne (23) bewegt wird, von der Saugvorrichtung (27) angesaugt und in der Mischkammer (26a) der Dispergiereinheit (26) mit konstanter Geschwindigkeit und Konzentration dispergiert und anschließend mit dem Anprallkörper (1) der Messeinrichtung (17) zur Kollision gebracht.

Die von dem Beschleunigungsaufnehmer (2) erfassten akustischen Signale werden in elektrische Signale umgeformt und in der nicht dargestellten Signalverarbeitungseinheit ausgewertet.

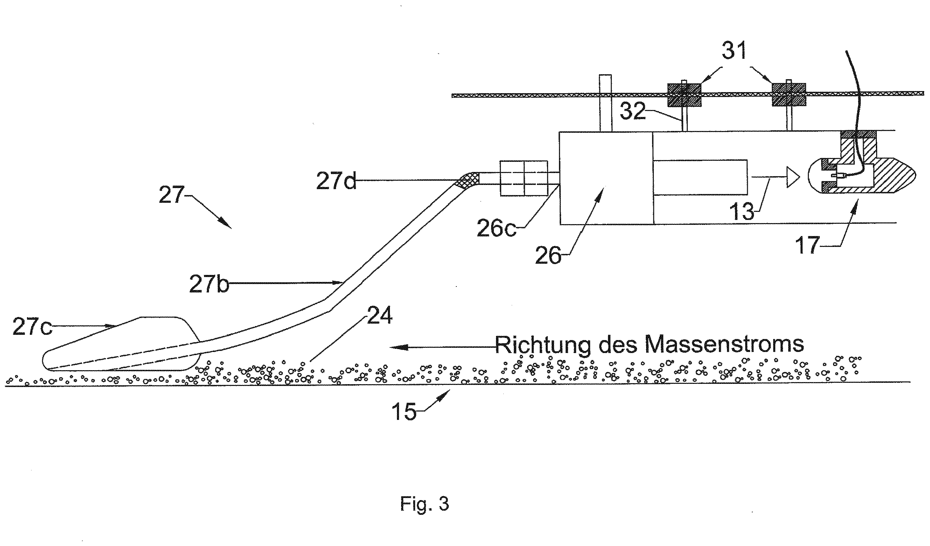

Figur 3 zeigt eine Ausführungsform einer erfindungsgemäßen Vorrichtung, bei der die Feststoffpartikel (24) aus einem kontinuierlichen Massestrom von Feststoffpartikeln (24) auf einem Bandförderer (15) mit einer Saugvorrichtung (27) entnommen werden. Die Saugvorrichtung (27) umfasst einen Saugkopf (27c), der auf dem Materialbett des Massestroms gleitend aufliegt. Eine Saugleitung (27b) verbindet den Saugkopf (27c) mit dem Einlass (26c) der Dispergiereinheit (26). Ein flexibles Verbindungselement (27d) in der Saugleitung (27b) gewährleistet die erforderliche Bewegungsfreiheit des Saugkopfes (27c), um etwaigen Höhenschwankungen des Materialbettes zu folgen. Die Dispergiereinheit (26) stimmt in Aufbau und Funktion mit der Dispergiereinheit nach Figur 2 überein. Die Messeinrichtung (17) stimmt in Aufbau und Funktion mit der Messeinrichtung nach Figur 1 überein.

Sowohl die Dispergiereinheit (26) als auch die Messeinrichtung (17) sind mittels einer Halterung (32) ortsfest über dem Bandförderer (15) gehaltert. Schwingungsdämpfer (31) entkoppeln die Vorrichtung von der Umgebung. Die Feststoffpartikel (24) werden vorzugsweise in Förderrichtung (13) hinter der Messeinrichtung (17) dem Massestrom auf dem Bandförderer (15) wieder zugeführt. Zusätzlich kann in Transportrichtung des Massestroms vor dem Saugkopf (27c) ein Abstreifer zur Glättung des Materialbettes auf der Bandanlage angeordnet sein.

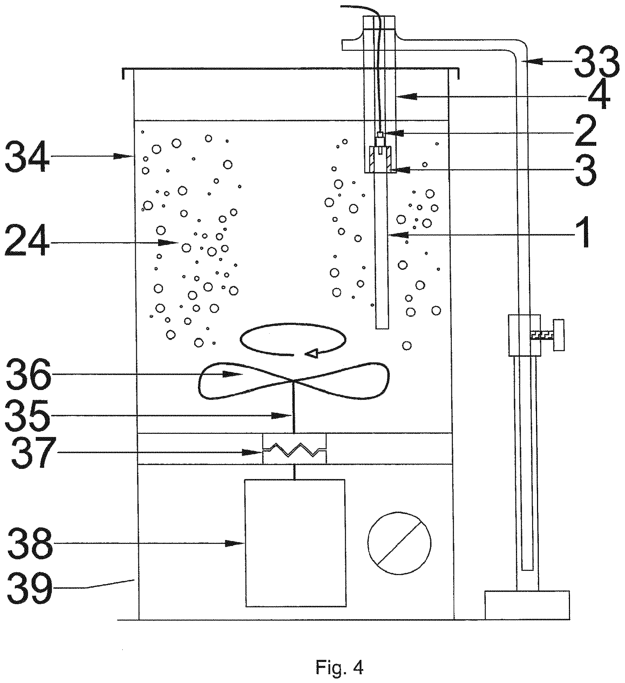

Figur 4 zeigt ein Ausführungsbeispiel einer Vorrichtung zur Durchführung des Verfahren umfassend einen stabförmigen Anprallkörper (1), einen Schwingungsaufnehmer (2), der mit der oberen Stirnseite des Anprallkörpers (1) verschraubt ist sowie eine Schwingungsisolierung (3) des stabförmigen Anprallkörpers (1) gegenüber einer Halterung (4), die an ihrer nach oben weisenden Stirnseite an einer Teleskopvorrichtung (33) höhenverstellbar montiert ist. Mit Hilfe der Teleskopvorrichtung (33) lässt sich die Eintauchtiefe des Anprallkörpers (1) in einen Behälter (34) einstellen. Am Boden des Behälters (34) ist eine Rührwerkzeug (36) um eine Welle (35) drehbar angeordnet, die durch die Bodenfläche des Behälters (34) hindurchtritt und über eine Kupplung (37) lösbar mit einem Antrieb (38) kuppelbar ist. Das Kuppeln zwischen dem Rührwerkzeug (36) und dem Antrieb (38) erfolgt automatisch beim Aufsetzen des Behälters (34) auf den Antriebssockel (39), in dem der Antrieb (38) untergebracht ist.

Zum Betrieb der Vorrichtung wird eine definierte, konstante Menge eines flüssigen Dispersionsmediums in den Behälter (34) gegeben. Außerdem wird eine definierte, konstante Menge der in dem Dispersionsmedium unlöslichen Feststoffpartikel (24) in den Behälter (34) gegeben. Der Anprallkörper (1) wird auf einer mittels der Teleskopvorrichtung (33) einstellbaren, definierten Länge in die Suspension getaucht. Der Antrieb (38) versetzt das Rührwerkzeug (36) in eine konstante Drehbewegung, sodass die Dispersion mit konstanter Strömungsenergie, d.h. konstanter Geschwindigkeit und Konzentration in Förderrichtung, hier einer Kreisbahn in Bewegung versetzt wird. Die aus der Kollision der Feststoffpartikel (24) mit dem Anprallkörper (1) resultierenden Körperschallschwingungen werden für die Ermittlung der Korngrößenverteilung im Rahmen der Signalverarbeitung herangezogen.

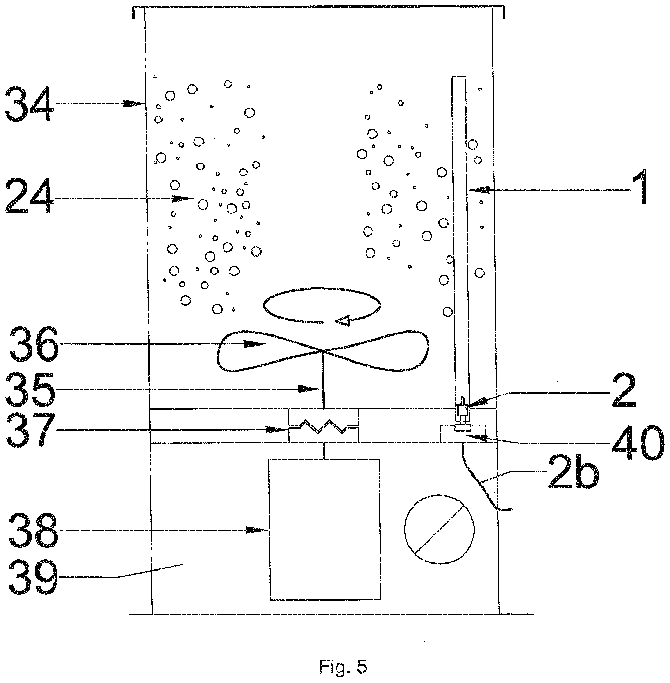

Figur 5 zeigt eine Ausführungsform der Vorrichtung nach Figur 4, die sich im Wesentlichen dadurch unterscheidet, dass der stabförmige Anprallkörper (1) bodenseitig in dem Behälter (34) befestigt ist und die Signale des an dessen Stirnseite unterhalb des Behälterbodens angeordneten Schwingungsaufnehmers (2) über eine elektrische Steckverbindung (40) zur der nicht dargestellten Signalverarbeitungseinheit übertragen werden. Das Herstellen der elektrischen Steckverbindung (40) und das Kuppeln zwischen dem Rührwerkzeug (36) und dem Antrieb (38) erfolgt automatisch beim Aufsetzen des Behälters (34) auf den Behältersockel (39).

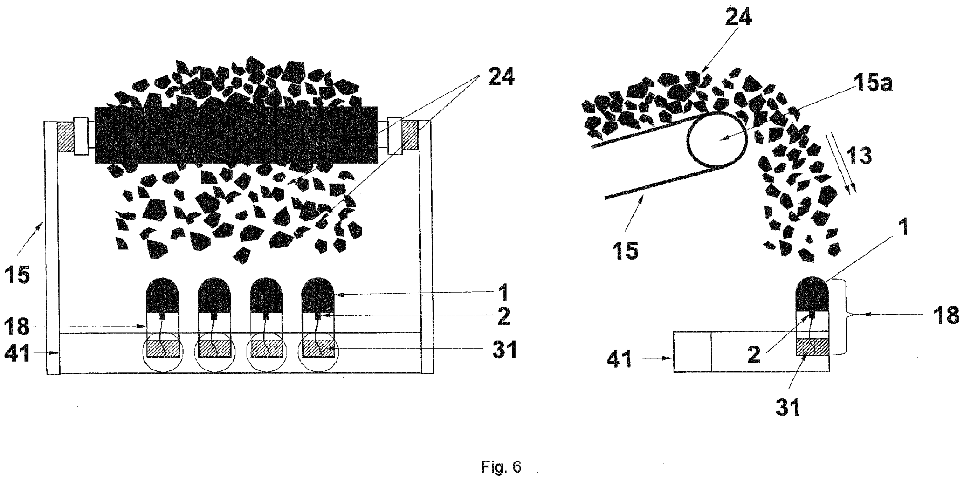

Bei der Ausführungsform nach Figur 6 ist die Fördereinrichtung zum Bewegen der Feststoffpartikel (24) in einer Förderrichtung (13) als Bandförderer (15) mit einer Übergabe (15a) ausgeführt. Vier Messeinrichtungen (18) umfassend einen sphärischen Anprallkörper (1), eine Halterung (4) für den Anprallkörper (1) und einen als Beschleunigungssensor ausgeführten Schwingungsaufnehmer (2) sind in Förderrichtung (13) hinter der Übergabe (15a) des Bandförderers (15) an einer in Höhe und Neigung verstellbaren Halterung (41) befestigt, die so eingestellt wird, dass die im freien Fall befindlichen Feststoffpartikel (24) des Förderstroms mit den Anprallkörpern (1) der vier Messeinrichtungen (18) kollidieren. Die Messeinrichtungen (18) sind vorzugsweise über Schwingungsdämpfer (31) an der Halterung (41) befestigt.

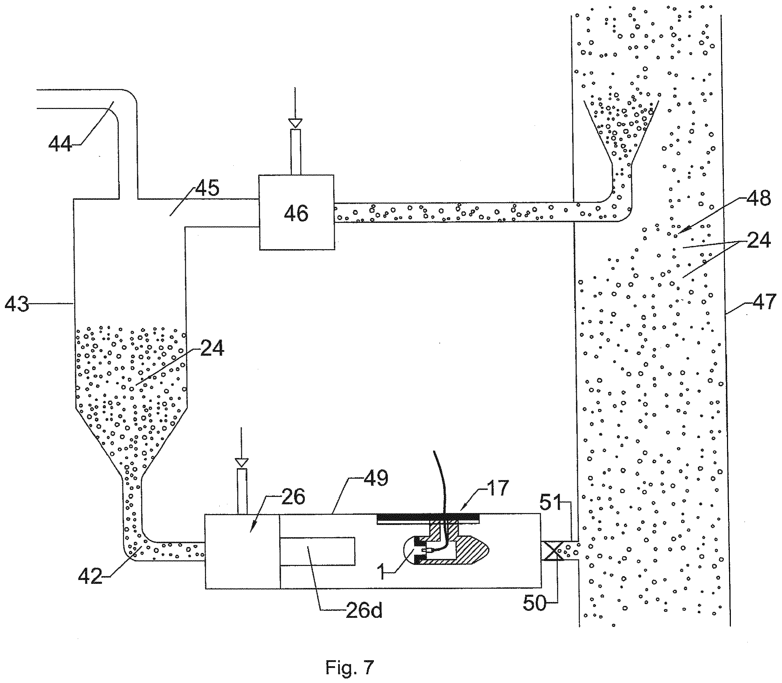

Die Vorrichtung nach Figur 7 umfasst eine Dispergiereinheit (26) deren Aufbau und Funktion der Dispergiereinheit (26) der Vorrichtung nach Figur 2 entspricht. Die Dispergiereinheit (26) ist über eine Leitung (42) mit einem Behälter (43) zur Aufnahme der Feststoffpartikel (24) verbunden. Der Behälter (43) weist einen Abluftkanal (44) und eine Befüllöffnung (45) auf, die mit dem Auslass einer Pumpe (46) verbunden ist, die saugseitig an eine Rohrleitung (47) eines pneumatischen Strömungsförderers (48) von Feststoffpartikeln (24) angeschlossen ist. Die Pumpe (46) ist als Strahlpumpe ausgeführt, deren Aufbau und Funktion der Dispergiereinheit (26) entspricht. Die Düse (26d) der Dispergiereinheit ist auf den Anprallkörper (1) der Messeinrichtung (17) ausgerichtet, die im Aufbau und der Funktion mit der Messeinrichtung nach Figur 1 übereinstimmt.

Die Vorrichtung arbeitet wie folgt:
Aus der Rohrleitung (47) des pneumatischen Strömungsförderers (48) wird eine Teilmenge der Feststoffpartikel (24) mit der Pumpe (46) während einer definierten Zeit entnommen und in den Behälter (43) gefördert. Über die Abluftleitung (44) kann die als Treibmedium der Strahlpumpe zugeführte Druckluft entweichen. Nach einer festgelegten Beruhigungsphase in dem Behälter (43) werden die Feststoffpartikel (24) kontinuierlich über die Leitung (42) von der Dispergiereinheit (26) angesaugt und mit konstanter Geschwindigkeit mit dem Anprallkörper (1) der Messeinrichtung (17) zur Kollision gebracht.

Die Messeinrichtung (17) ist in einer allseitig geschlossenen Einhausung (49) angeordnet. In Förderrichtung hinter der Messbaugruppe (17) ist ein Auslass für die Feststoffpartikel in der Einhausung (49) angeordnet, der über eine mit einem Absperrelement (50) versehene Rückführleitung (51) mit dem pneumatischen Strömungsförderer (48) verbunden ist. Während der Bestimmung der Korngrößenverteilung ist das Absperrelement (50) geöffnet. Während des Befüllens des Behälters (43) mittels der Pumpe (46) ist das Absperrelement (50) indes geschlossen, um ein Einströmen von Feststoffpartikeln über die Rückführleitung (51) in die Einhausung (49) zu verhindern.

Die in Figur 7 dargestellte Vorrichtung erlaubt zusätzlich zu der Korngrößenbestimmung der Feststoffpartikel eine indirekte Bestimmung der Konzentration der Feststoffpartikel in dem pneumatischen Förderer (48). Diese indirekte Bestimmung ist möglich, da die Saugleistung der Pumpe (46) und die Betriebsdauer der Pumpe (46) zur Entnahme der Feststoffpartikel aus dem pneumatischen Förderer (48) für jede Bestimmung der Korngrößenverteilung konstant sind. Die Zeit, die für die Dispergierung der Feststoffpartikel in dem Behälter (43) mit der Dispergiereinheit (26) benötigt wird, ist direkt proportional zur Konzentration der Feststoffpartikel in dem pneumatischen Förderer (48), da die Dispergiereinheit ebenfalls mit konstanter Saugkraft arbeitet.

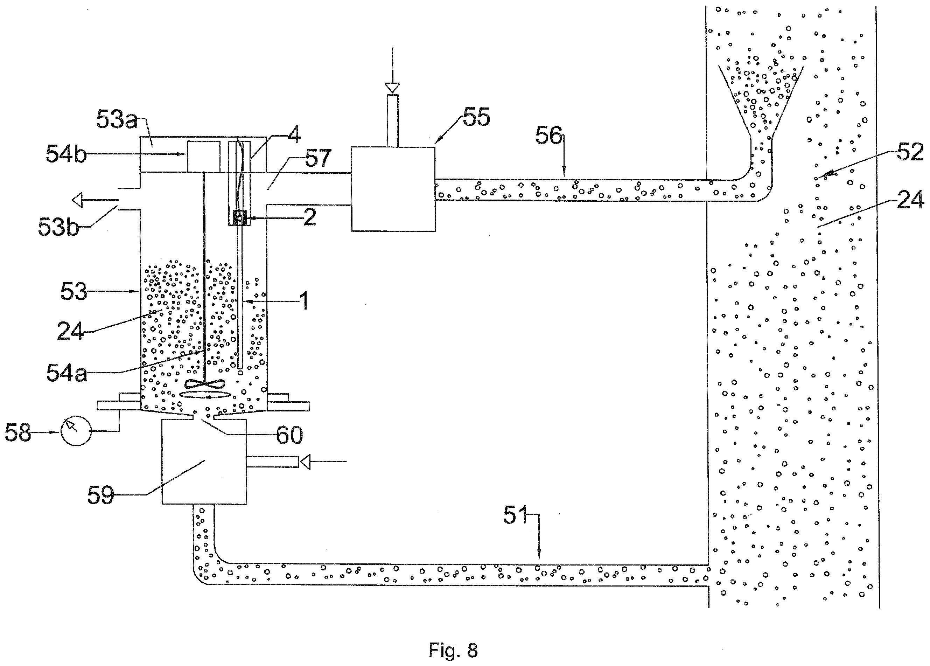

Figur 8 zeigt eine Vorrichtung zur diskontinuierlichen Bestimmung der Korngrößenverteilung von Feststoffpartikeln (24) einer Dispersion umfassend die Feststoffpartikel (24) und ein flüssiges Dispersionsmedium, die in einem hydraulischen Strömungsförderer (52) gefördert wird. Die Vorrichtung umfasst einen Behälter (53) für die Aufnahme einer Teilmenge der Dispersion. Die Teilmenge der Dispersion wird mit einer ersten steuerbaren Pumpe (55) während einer definierten Zeit über eine Leitung (56) aus dem Strömungsförderer (52) entnommen und gelangt über eine Befüllöffnung (57) in den Behälter (53). Der Behälter (53) ist mit einem Überlauf (53b) versehen. Die erste Pumpe (56) ist insbesondere als Strahlpumpe ausgeführt, deren Funktionsweise der Dispergiereinheit (26) entspricht.

Die Teilmenge wird über einen konstanten Zeitraum und mit konstanter Pumpleistung in den Behälter (53) gefördert.

Infolgedessen ist das Volumen der dem hydraulischen Strömungsförderer (52) entnommenen Teilmenge der Dispersion in dem Behälter (53) stets konstant. Mit Hilfe einer Waage (58) wird die dem hydraulischen Strömungsförderer entnommene Teilmenge der Dispersion gewogen. Aus dem Geweicht der Dispersion wird der Anteil der Feststoffpartikel (24) in dem Behälter (53) ermittelt. Der Feststoffanteil ist direkt proportional zur Massekonzentration der Dispersion im Behälter. Nach Beruhigung der Dispersion in dem befüllten Behälter (53) und Wiegung der Dispersion versetzt das Rührwerkzeug (54a) die Dispersion mit einer konstanten Geschwindigkeit in eine Drehbewegung. Dabei kollidieren die Feststoffpartikel (24) mit dem stabförmigen Anprallkörper (1), der von einer Halterung (4) gehalten wird. Die Halterung (4) ist wie auch der Antrieb (54b) des Rührwerkzeugs (54a) in einem abnehmbaren Deckel (53a) des Behälters (53) integriert.

Nach Beendigung des Messvorgangs wird mittels einer zweiten Pumpe (59)der Behälter (53) über einen bodenseitigen Auslass (60) entleert. Die zweite Pumpe (59) ist insbesondere als Strahlpumpe ausgeführt, deren Funktionsweise der Dispergiereinheit (26) entspricht. Die Druckseite der zweiten Pumpe (59) ist über eine Rückführleitung (51) mit dem hydraulischen Strömungsförderer (52) verbunden.

Vor Beginn des Regelbetriebs der Signalverarbeitung der elektrischen Signale des Schwingungsaufnehmers einer der vorstehend beschriebenen Vorrichtungen zur Korngrößenanalyse mit der Messeinrichtung (17 bzw. 18) ist deren Kalibrierung erforderlich.

Nachfolgend wird die Kalibrierung für ein Granulat mit einer relativ geringen zu erwartenden Schwankung der Korngrößenverteilung näher erläutert:
Mit dem Schwingungsaufnehmer (2) der Messeinrichtung (17, 18) wird der Körperschall, resultierend aus dem Anprall der mit dem Anprallkörper (1) kollidierenden Feststoffpartikel als Analogsignal erfasst. Das Analogsignal wird mit einer Abtastrate, von beispielsweise 51.200 S/s mit einem Analogdigitalwandler (A/D Wandler) abgetastet und in ein zeitdiskretes Signal umgewandelt und digitalisiert. Die Abtastrate ist vorzugsweise doppelt so hoch wie die höchste Spektralkomponente Fₐ. Bei der Abtastung von Signalen mit Frequenzen oberhalb der höchsten Spektralkomponente treten Fehler wie der Alias-Effekt auf. Zur Reduzierung derartiger Abtastfehler wird in einer vorteilhaften Ausgestaltung der Erfindung die Eingangsfrequenz des A/D Wandlers mittels eines analogen Tiefpassfilters (Anti-Aliasing Filter) beschränkt.

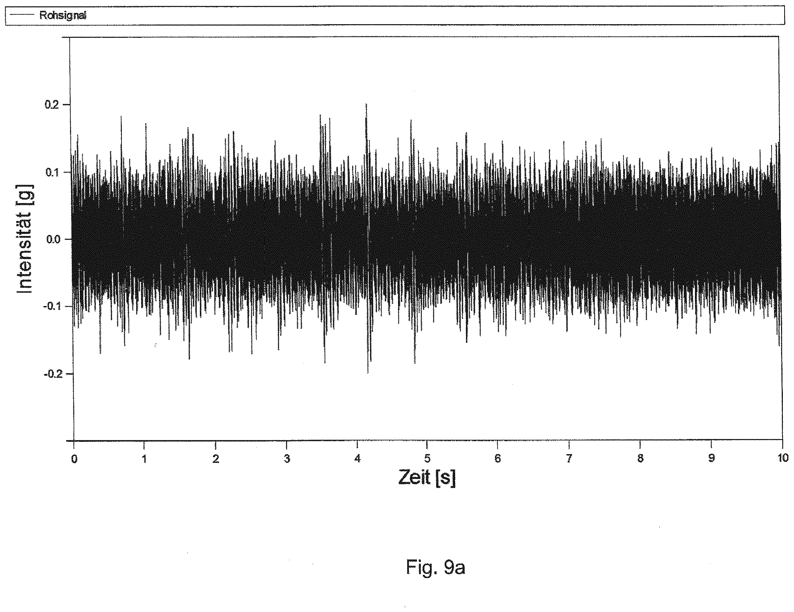

Das mit Hilfe des A/D Wandlers digitalisierte, zeitabhängige Rohsignal ist beispielhaft in Figur 9a dargestellt, wobei auf der x-Achse die Zeit und auf der y-Achse die Signalintensität abgetragen wird.

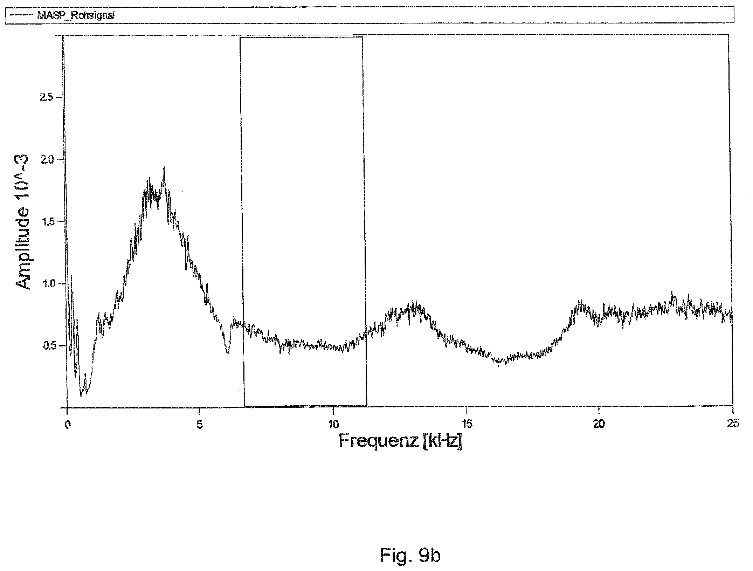

Das Rohsignal wird mit einem Bandpassfilter gefiltert, um Störgeräusche, die nicht durch den Anprall der Feststoffpartikel, sondern Umgebungsgeräusche ausgelöst werden, zu reduzieren. Die Einstellung des Bandpassfilters erfolgt mit Hilfe einer Spektralanalyse. Beispielsweise wird der Bandpassfilter auf einen Bereich von 7 bis 11 kHz gesetzt, wie dies in Figur 9b erkennbar ist.

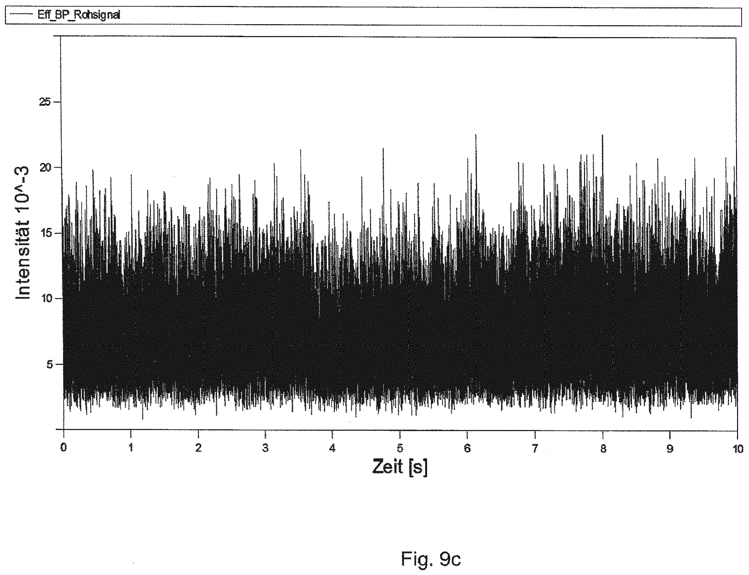

Aus den gefilterten Rohsignalen werden gleitende Effektivwerte gebildet. Dies ist der quadratische Mittelwert des zeitlich veränderten, abgefilterten Rohsignales. Eine Darstellung der gleitenden Effektivwerte der Signalstärke ergibt sich aus Figur 9c. Anschließend werden die Effektivwerte der Signalstärke logarithmiert.

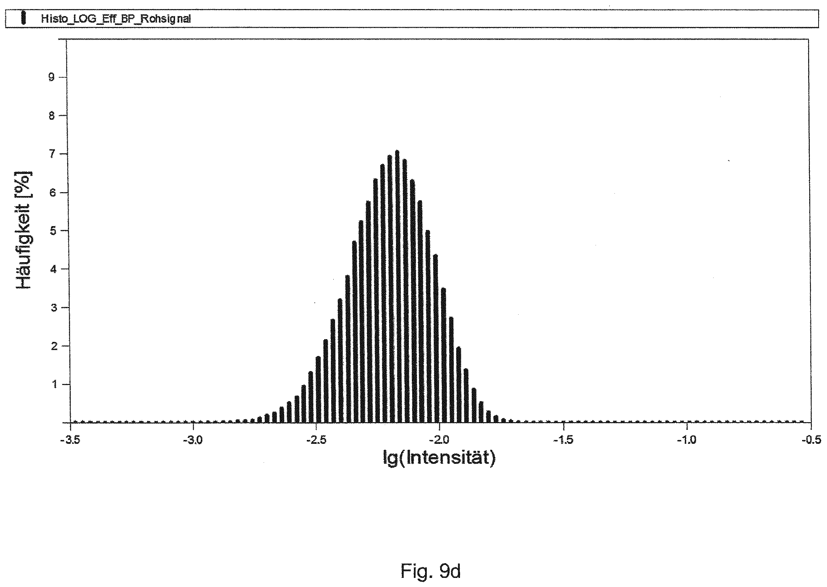

Sodann erfolgt eine Signalklassierung der logarithmierten Effektivwerte in mehrere Klassen mit unterschiedlicher Signalstärke. Beispielsweise werden die logarithmierten Effektivwerte auf 100 Klassen aufgeteilt. Die Häufigkeitsverteilung über die 100 Klassen mit unterschiedlicher Signalstärke ergibt sich aus der Figur 9d.

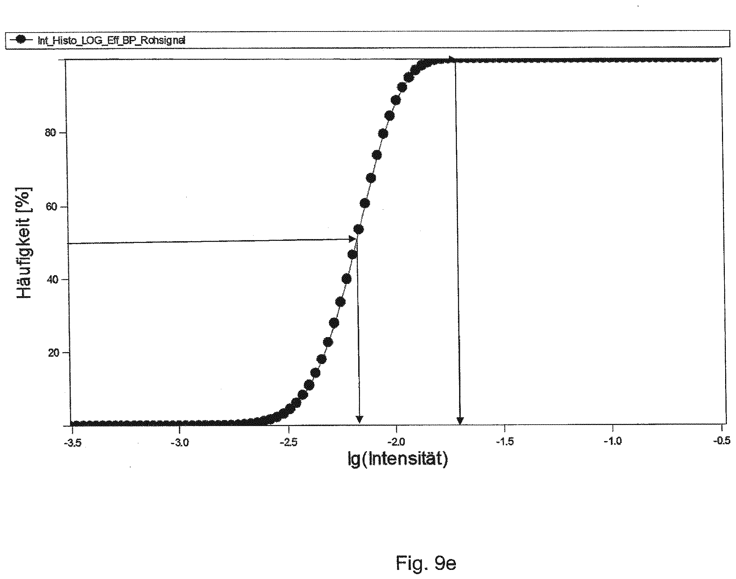

Durch Integration der Signalintensitätswerte erhält man die Summenverteilung der Effektivwerte, wie sie aus Figur 9e erkennbar ist. Die Summenverteilungskurve beginnt mit dem Wert 0 und endet bei 100%. Figur 9e lässt sich beispielsweise entnehmen, dass 50% der Signalwerte kleiner als -2,18 und 100% der Signalintensitätswerte kleiner als -1,65 sind. Die über einen beliebigen vorwählbaren Zeitraum vorgenommene Signalklassierung der elektrischen Signale des Schwingungsaufnehmers (2) ist damit abgeschlossen.

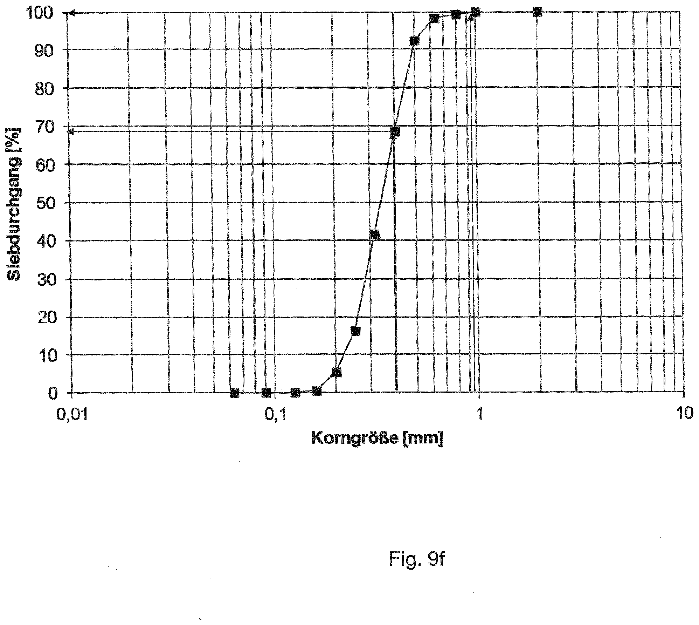

Aus dem zur Kalibrierung untersuchten Förderstrom wird außerdem während des Untersuchungszeitraums eine Probe gezogen, deren Korngrößenverteilung mit einer herkömmlichen Methode zur Bestimmung der Korngrößenverteilung ermittelt wird. Hierzu wird beispielsweise eine trockene Siebklassierung durchgeführt. Die im Wege der Siebklassierung bestimmte Korngrößenverteilung der Probe ist beispielhaft in Figur 9f dargestellt. Aus der Siebkurve lässt sich beispielsweise ablesen, dass sämtliche Feststoffpartikel kleiner als 1 Millimeter sind. Des Weiteren lässt sich ablesen, wie viele Gewichtsprozente der Feststoffpartikel kleiner als eine bestimmte Größe (Siebklasse) sind. In dem dargestellten Beispiel sind beispielsweise 69 Gewichtsprozente der Feststoffpartikel kleiner als 0,4mm.

Zur Ermittlung der Kalibrierfunktion wird nun eine Korrelation zwischen der Summenverteilung der Effektivwerte (vgl. Figur 9e) und der im Wege der Siebklassierung ermittelten Korngrößenverteilung der Probe des Granulats (vgl. Figur 9f) ermittelt.

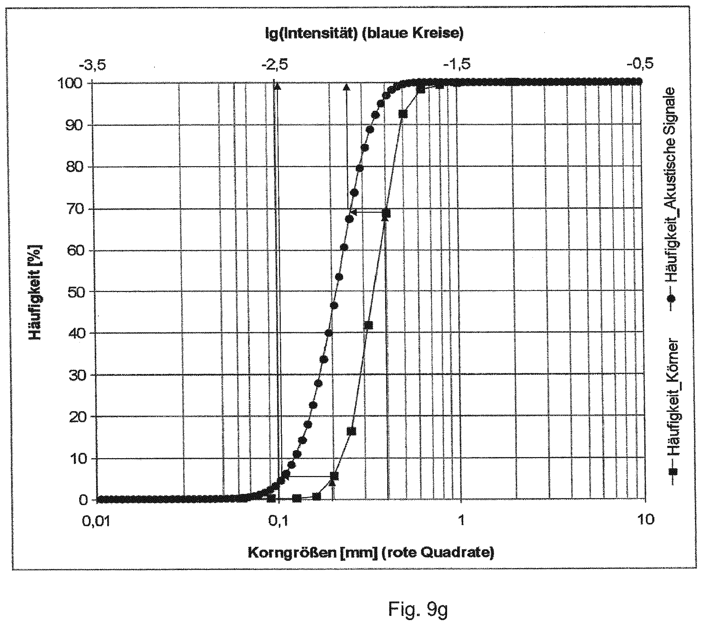

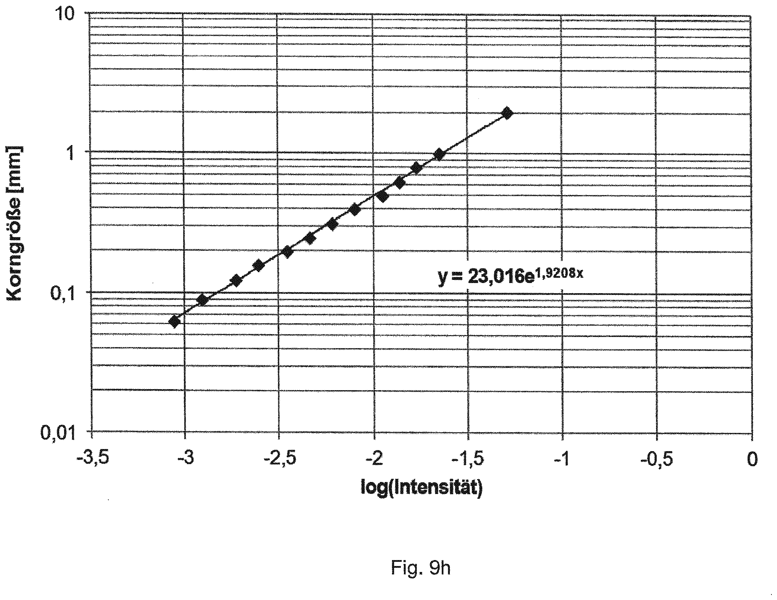

Figur 9g veranschaulicht, wie die Summenverteilung der Effektivwerte und die im Wege der Siebklassierung ermittelte Korngrößenverteilung in ein Diagramm eingetragen werden. Wobei auf der x-Achse einerseits die Korngrößen in mm und andererseits die logarithmierte Effektivwert der Signalstärke (Intensität) aufgetragen werden. Aus dem Diagramm ergibt sich beispielsweise, dass das im Wege der Siebklassierung untersuchte Material 6 Gewichtsprozente Feststoffpartikel aufweist, die kleiner als 0,2 mm sind. Dem gleichen Prozentanteil entspricht der logarithmierte Effektivwert von -2,46. Weiter ergibt sich beispielhaft aus dem Diagramm nach Figur 9g, dass das im Wege der Siebklassierung untersuchte Material 69 Gewichtsprozente an Feststoffpartikeln aufweist, die kleiner als 0,4 mm sind. Dem gleichen Prozentanteil entspricht ein logarithmierter Effektivwert von -2,1. Entsprechend den beiden vorstehend dargelegten Beispielen werden für sämtliche Kornklassen die entsprechenden logarithmierten Effektivwerte anhand des Diagramms ermittelt. Auf der Basis dieser Werte wird die Korrelation, d.h. die Kalibrierfunktion ermittelt, wie beispielhaft in Figur 9h dargestellt ist.

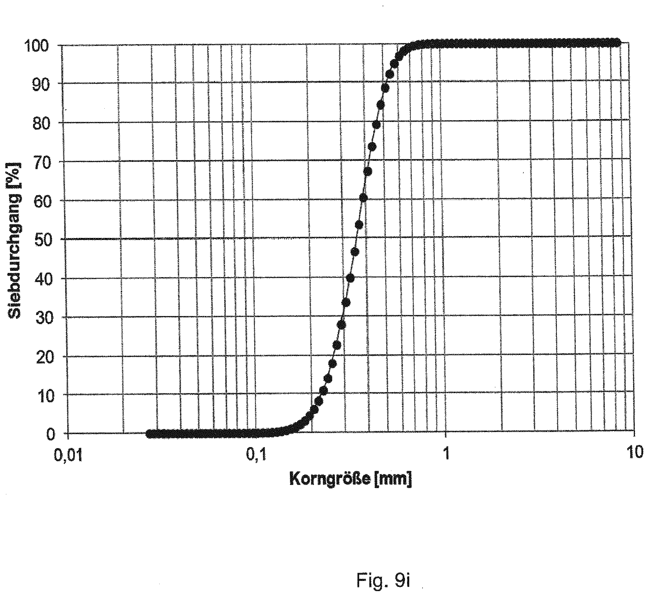

Die derart ermittelte Kalibrierfunktion wird in dem sich anschließenden Regelbetrieb der Signalverarbeitung der Messeinrichtung angewendet. Die Signalverarbeitung erfolgt in gleicher Weise wie bei der zuvor beschriebenen Kalibrierung durch eine Signalklassierung der elektrischen Signale des Schwingungsaufnehmers (2). Durch Anwenden der zuvor ermittelten Kalibrierfunktion nach Figur 9h lässt sich aus der im Wege der Signalklassierung gewonnenen Summenverteilung der Effektivwerte eine Siebkurve aus den akustischen Signalen bilden, wie dies in Figur 9i dargestellt ist. Aus dieser Siebkurve lässt sich die Korngrößenverteilung anhand der mit dem Schwingungsaufnehmer (2) aufgenommen elektrischen Signale zuverlässig ermitteln.

Für den Fall, dass die zu erwartenden Schwankungen der Korngrößenverteilung des Granulats einer größeren Variation unterliegen, werden vor Beginn des Regelbetriebs zur Signalverarbeitung der elektrischen Signale zum Bestimmen der Korngrößenverteilung im Rahmen der Kalibrierung für 1-N Proben aus dem Förderstrom mit unterschiedlichen Korngrößenverteilungen entsprechend der zu erwartenden Schwankungsbreite jeweils eine Kalibrierfunktion einschließlich einer Zuordnungsfunktion (Figur 12) erstellt. Mit der Zuordnungsfunktion wird im anschließenden Regelbetrieb die für die Korngrößenverteilung passende Kalibrierfunktion 1 - N ausgewählt.

Die Kalibrierfunktionen für die 1 bis N Proben werden jeweils im Wege einer Signalklassierung ermittelt, wie anhand der der Figuren 9 a - h erläutert. Die für jede Probe 1 - N ermittelte Kalibrierfunktion 1 - N wird in einer Datenbank gespeichert.

Aus Figur 12 ergibt sich, wie im Rahmen der Kalibrierung die Zuordnungsfunktion erstellt wird. Für jede Probe 1 - N mit stark schwankender Korngrößenverteilung werden hierzu folgende Schritte durchgeführt:
Die Rohsignale der Proben 1 - N werden einer Frequenzanalyse unterzogen. Hierzu wird eine diskrete Fourier Transformation (DFT) vorgenommen. Aus dem für die jeweilige Probe 1 - N erzeugten DFT's wird ein Mittelwert gebildet, aus dem die Frequenzkomponenten ermittelt werden. Dabei gilt, dass die Anzahl der Proben größer sein muss als die Anzahl der Frequenzkomponenten.

Aus den Frequenzkomponenten der jeweiligen Proben 1 - N wird eine DFT-Matrix gebildet. Die Zeilen dieser DFT-Matrix entsprechen den Frequenzkomponenten, die Spalten der Anzahl der Proben. Die DFT-Matrix wird einer Hauptkomponentenanalyse (PCA) unterzogen. Das Ergebnis der PCA in Form der jeweiligen Hauptkomponenten (PC1 - PCM) der jeweiligen Proben sowie von Hauptkomponenten - Koeffizienten (auch als Loading Matrix bezeichnet) werden in der Datenbank gespeichert.

Die Werte der Hauptkomponenten (PC1 - PCM) der jeweiligen Probe 1 - N definieren ein relativ eng begrenztes Spektrum der Korngrößenverteilung, dem die Korngrößenverteilung der zugehörigen Probe 1- N und die zu der Probe zuvor ermittelte Kalibrierfunktion 1 - N zugeordnet werden kann.

Im Regelbetrieb der Signalverarbeitung (Figur 13) bei starken zu erwartenden Schwankungen der Korngrößenverteilung wird das Rohsignal ebenfalls zusätzlich zu der Signalklassierung einer diskreten Fourier-Transformation (DFT) unterzogen.

Aus dem Mittelwert der DFT's werden die Frequenzkomponenten errechnet. Durch Multiplikation der Frequenzkomponenten mit dem in der Datenbank gespeicherten Hauptkomponenten-Koeffizienten (Loading Matrix) werden die Hauptkomponenten PC1 - PCM ermittelt. Die Hauptkomponenten PC1 - PCM werden mit den Hauptkomponenten, die in der Kalibrierphase aus den Signalen der Proben 1 - N erzeugt wurden, verglichen. Der Vergleich erfolgt, in dem die Differenz zwischen den ermittelten Werten der Hauptkomponenten, die aus dem Signal des zu untersuchenden Granulats erzeugt wurden, und den Werten der Hauptkomponenten PC1 - PCM, die in der Datenbank gespeichert sind und der jeweiligen Probe 1 - N zugeordnet sind, errechnet wird. Die Kalibrierfunktion derjenigen Probe 1 -N, für die diese Differenz am geringsten ist wird ausgewählt.

Durch Anwenden der ausgewählten Kalibrierfunktion lässt sich aus der im Wege der Signalklassierung gewonnenen Summenverteilung der Effektivwerte eine Siebkurve aus den akustischen Signalen bilden. Aus dieser Siebkurve lässt sich die Korngrößenverteilung anhand der mit dem Schwingungsaufnehmer aufgenommen elektrischen Signale zuverlässig ermitteln.

| **Nr.** | **Bezeichnung** |
|---|---|
| 1. | Anprallkörper |
| 1a. | Kollisionsteil |
| 1b. | Halteteil |
| 2. | Schwingungsaufnehmer |
| 2a. | Neutrale Achse |
| 2b. | Signalleitung |
| 3. | Schwingungsisolierung |
| 3a. | Kreisringförmiger Abschnitt |
| 3b. | Hohlzylindrischer Abschnitt |
| 4. | Halterung |
| 4a. | Rohrförmiger Abschnitt |
| 4b. | Rohrförmiger Abschnitt |
| 4c. | Höhlung |
| - | - |
| 13. | Förderrichtung |
| - | - |
| 15. | Bandförderer |
| 15a. | Umlenkung |
| - | - |
| 17. | Messeinrichtung |
| 18. | Messeinrichtung |
| 20. | Tisch |
| 21. | Antrieb |
| 22. | Halterung |
| 23. | Rinne |
| 24. | Feststoffpartikel |
| 25. | Stütze |
| 26 | Dispergiereinheit |
| 26a. | Mischkammer |
| 26b. | Einlass Luft |
| 26c. | Einlass Feststoffpartikel |
| 26d. | Düse |
| 26e. | Auslass Dispersion |
| 27. | Saugvorrichtung |
| 27a. | Einlassöffnung |
| 27b. | Saugleitung |
| 27c. | Saugkopf |
| 27d. | Verbindungselement |
| 28. | Schienensystem |
| 29. | Behälter |
| 29a. | Behälteröffnung |
| 29b. | Auffangbehälter |
| 29c. | Auslassöffnung |
| 30. | Fliehkraftabscheider |
| 30a. | Leitung |
| 30b. | Partikelbehälter |
| 30c. | Saugvorrichtung |
| 31. | Schwingungsdämpfer |
| 32. | Halterung |
| 33. | Teleskopvorrichtung |
| 34. | Behälter |
| 35. | Welle |
| 36. | Rührwerkzeug |
| 37. | Kupplung |
| 38. | Antrieb |
| 39. | Antriebssockel |
| 40. | Steckverbindung |
| 41. | Halterung |
| 42. | Leitung |
| 43. | Behälter |
| 44. | Abluftöffnung |
| 45. | Befüllöffnung |
| 46. | Pumpe |
| 47. | Rohrleitung |
| 48. | Pneumatischer Strömungsförder |
| 49. | Einhausung |
| 50. | Absperrelement |
| 51. | Rückführleitung |
| 52. | Hydraulischer Strömungsförderer |
| 53. | Behälter |
| 53a. | Deckel |
| 53b. | Überlauf |
| 54a. | Rührwerkzeug |
| 54b. | Antrieb |
| 55. | Erste Pumpe |
| 56. | Befüllleitung |
| 57. | Befüllöffnung |
| 58. | Waage |
| 59. | Zweite Pumpe |
| 60. | Auslass |

## Patentansprüche

1. Verfahren zum Bestimmen der Korngrößenverteilung von Granulaten bestehend aus Feststoffpartikeln (24) mit unterschiedlichen Korngrößen umfassend die Schritte
- Bewegen der Feststoffpartikel (24) in einer Förderrichtung (13) in einen Förderstrom,
- Steuerung der Strömungsenergie des Förderstroms derart, dass diese konstant gehalten wird,
- wobei die Strömungsenergie durch die Geschwindigkeit und Konzentration bzw. Schüttdichte der Feststoffpartikel (24) des Granulats bestimmt wird,
- wobei die Feststoffpartikel (24) in dem Förderstroms mit konstanter Strömungsenergie mit mindestens einem als Wellenleiter eingerichteten Anprallkörper (1) kollidieren und akustische Signale erzeugen, die sich in jedem Anprallkörper (1) als Körperschallwellen ausbreiten,
- Erfassen der akustischen Signale und Umformen in elektrische Signale mit Hilfe mindestens eines Schwingungsaufnehmers (2) und
- Signalverarbeitung der elektrischen Signale jedes Schwingungsaufnehmers (2) zur Bestimmung der Korngrößenverteilung,
- wobei die Strömungsenergie dadurch konstant gehalten wird, dass
- ein Behälter (34) diskontinuierlich mit einer konstanten Menge der Feststoffpartikel (24) als disperse Phase und einer konstanten Menge eines flüssigen Dispersionsmediums befüllt wird und
- die Dispersion in eine Drehbewegung mit konstanter Geschwindigkeit versetzt wird, so dass die Feststoffpartikel (24) in der Dispersion mit dem in den Behälter (34) ragenden Anprallkörper 1)kollidieren.

2. Verfahren zum Bestimmen der Korngrößenverteilung von Granulaten bestehend aus Feststoffpartikeln (24) mit unterschiedlichen Korngrößen umfassend die Schritte
- Bewegen der Feststoffpartikel (24) in einer Förderrichtung (13) in einen Förderstrom,
- Steuerung der Strömungsenergie des Förderstroms derart, dass diese konstant gehalten wird,
- wobei die Strömungsenergie durch die Geschwindigkeit und Konzentration bzw. Schüttdichte der Feststoffpartikel (24) des Granulats bestimmt wird,
- wobei die Feststoffpartikel (24) in dem Förderstroms mit konstanter Strömungsenergie mit mindestens einem als Wellenleiter eingerichteten Anprallkörper (1) kollidieren und akustische Signale erzeugen, die sich in jedem Anprallkörper (1) als Körperschallwellen ausbreiten,
- Erfassen der akustischen Signale und Umformen in elektrische Signale mit Hilfe mindestens eines Schwingungsaufnehmers (2) und
- Signalverarbeitung der elektrischen Signale jedes Schwingungsaufnehmers (2) zur Bestimmung der Korngrößenverteilung,
- wobei die Strömungsenergie dadurch konstant gehalten wird, dass die Feststoffpartikel (24) als disperse Phase in einer Mischkammer (26a) einer Dispergiereinheit (26) mit einem gasförmigen, mit konstantem Volumenstrom der Mischkammer (26a) zugeführten Dispersionsmedium gemischt werden und der Auslass (26d) der Dispergiereinheit (26) für die Dispersion auf den Anprallkörper (1) ausgerichtet wird.

3. Verfahren nach Anspruch 2 , **dadurch gekennzeichnet, dass** die Dispergiereinheit (26) die Feststoffpartikel (24) über eine mit der Mischkammer (26a) verbundene Saugvorrichtung (27) ansaugt, wobei eine Einlassöffnung (27a) der Saugvorrichtung (27) mit konstanter Geschwindigkeit und konstantem Abstand relativ zu einer gleichmäßig mit Feststoffpartikeln (24) befüllten rinnenartigen Vertiefung in Richtung von deren Längserstreckung bewegt wird.

4. Verfahren nach Anspruch 2, **dadurch gekennzeichnet, dass** die Dispergiereinheit (26) die Feststoffpartikel (24) über eine mit der Mischkammer (26a) verbundene Saugvorrichtung (27) ansaugt, die Feststoffpartikel (24) aus einem kontinuierlichen Massenstrom von Feststoffpartikeln (24) mit der Saugvorrichtung (27) entnommen werden, wobei die Saugvorrichtung (27) einen an einer Saugleitung (27b) angeordneten Saugkopf (27c) aufweist, der während der Entnahme der Feststoffpartikel (24) auf der Oberfläche des Massestroms aufliegt, wobei die Saugvorrichtung (27) derart eingerichtet ist, dass der Saugkopf (27c) Höhenschwankungen des Massestroms folgen kann.

5. Verfahren nach Anspruch 2, **dadurch gekennzeichnet, dass** die Saugseite der Dispergiereinheit (26) über eine Leitung (42) mit einem Behälter (43) verbunden ist, der diskontinuierlich mit einer zuvor festgelegten Menge der Feststoffpartikel (24) befüllt wird, wobei die festgelegte Menge der Feststoffpartikel einem Förderstrom von Feststoffpartikeln (24) in einem pneumatischen Strömungsförderer (48) mit konstanter Geschwindigkeit und über einen festgelegten Zeitraum entnommen wird.

6. Verfahren nach Anspruch 5, **dadurch gekennzeichnet, dass** die Entnahme mit einer Pumpe (46) erfolgt, die saugseitig an die Rohrleitung (47) des Strömungsförderers (48) und auslassseitig an den Behälter (43) angeschlossen ist und die entnommen Menge der Feststoffpartikel (24) nach dem Erfassen der akustischen Signale dem pneumatischen Strömungsförderer (48) wieder zugeführt wird.

7. Verfahren zum Bestimmen der Korngrößenverteilung von Granulaten bestehend aus Feststoffpartikeln (24) mit unterschiedlichen Korngrößen umfassend die Schritte
- Bewegen der Feststoffpartikel (24) in einer Förderrichtung (13) in einen Förderstrom,
- Steuerung der Strömungsenergie des Förderstroms derart, dass diese konstant gehalten wird,
- wobei die Strömungsenergie durch die Geschwindigkeit und Konzentration bzw. Schüttdichte der Feststoffpartikel (24) des Granulats bestimmt wird,
- wobei die Feststoffpartikel (24) in dem Förderstroms mit konstanter Strömungsenergie mit mindestens einem als Wellenleiter eingerichteten Anprallkörper (1) kollidieren und akustische Signale erzeugen, die sich in jedem Anprallkörper (1) als Körperschallwellen ausbreiten,
- Erfassen der akustischen Signale und Umformen in elektrische Signale mit Hilfe mindestens eines Schwingungsaufnehmers (2) und
- Signalverarbeitung der elektrischen Signale jedes Schwingungsaufnehmers (2) zur Bestimmung der Korngrößenverteilung,
- wobei die Strömungsenergie dadurch konstant gehalten wird, dass der Massestrom von Feststoffpartikeln (24) auf einem Stetigförderer mit Hilfe eines gestellfest an dem Stetigförderer angeordneten Abstreifers konstant gehalten wird.

8. Verfahren nach Anspruch 7, **dadurch gekennzeichnet, dass** der Abstreifer gestellfest an dem Stetigförderer in einer Höhe angebracht wird, dass er unter Berücksichtigung der maximal zu erwartenden Höhenschwankungen des Förderstroms vor dem Abstreifer stets auf der Oberfläche des Förderstroms aufliegt und die Feststoffpartikel (24) des Förderstroms mit konstanter Strömungsenergie mit mindestens einem in den Förderstrom eintauchenden Anprallkörper (1) kollidieren.

9. Verfahren nach Anspruch 7, **dadurch gekennzeichnet, dass** der Abstreifer gestellfest an dem Stetigförderer in einer Höhe angebracht wird, dass er unter Berücksichtigung der maximal zu erwartenden Höhenschwankungen des Förderstroms vor dem Abstreifer stets auf der Oberfläche des Förderstroms aufliegt und die Feststoffpartikel (24) des Förderstroms mit konstanter Strömungsenergie mit mindestens einem hinter der Übergabe (15a) des Stetigförderers in dem frei fallenden Förderstrom angeordneten Anprallkörper (1) kollidieren.

10. Verfahren zum Bestimmen der Korngrößenverteilung von Granulaten bestehend aus Feststoffpartikeln (24) mit unterschiedlichen Korngrößen umfassend die Schritte
- Bewegen der Feststoffpartikel (24) in einer Förderrichtung (13) in einen Förderstrom,
- Steuerung der Strömungsenergie des Förderstroms derart, dass diese konstant gehalten wird,
- wobei die Strömungsenergie durch die Geschwindigkeit und Konzentration bzw. Schüttdichte der Feststoffpartikel (24) des Granulats bestimmt wird,
- wobei die Feststoffpartikel (24) in dem Förderstroms mit konstanter Strömungsenergie mit mindestens einem als Wellenleiter eingerichteten Anprallkörper (1) kollidieren und akustische Signale erzeugen, die sich in jedem Anprallkörper (1) als Körperschallwellen ausbreiten,
- Erfassen der akustischen Signale und Umformen in elektrische Signale mit Hilfe mindestens eines Schwingungsaufnehmers (2) und
- Signalverarbeitung der elektrischen Signale jedes Schwingungsaufnehmers (2) zur Bestimmung der Korngrößenverteilung,
- wobei die Strömungsenergie dadurch konstant gehalten wird, dass
- ein Behälter (53) diskontinuierlich mit einem konstanten Volumen einer Dispersion umfassend die Feststoffpartikel (24) als disperse Phase und ein flüssiges Dispersionsmediums befüllt wird,
- die Masse der Dispersion in dem Behälter (53) gewogen wird,
- die Dispersion in eine Drehbewegung mit konstanter Geschwindigkeit versetzt wird,
- im Rahmen der Signalverarbeitung aus der Masse der Dispersion in dem Behälter (53) der Anteil der Feststoffpartikel (24) ermittelt wird, der proportional zur Konzentration der Feststoffpartikel in der Dispersion ist,
- und die Signalverarbeitung der elektrischen Signale jedes Schwingungsaufnehmers (2) zur Bestimmung der Korngrößenverteilung unter Berücksichtigung der Konzentration erfolgt.

11. Verfahren nach Anspruch 10, **dadurch gekennzeichnet, dass** das konstante Volumen der Dispersion einem Förderstrom von Feststoffpartikeln in einem hydraulischen Strömungsförderer (52) mit konstanter Entnahmegeschwindigkeit und über einen festgelegten Zeitraum entnommen wird, die Entnahme mit einer Pumpe (55) erfolgt, die saugseitig an die Rohrleitung (47) des hydraulischen Strömungsförderers (52) und auslassseitig an den Behälter (53) angeschlossen ist, und die entnommen Menge der Dispersion nach dem Erfassen der akustischen Signale dem hydraulischen Strömungsförderer (52) wieder zugeführt wird.

12. Verfahren nach einem der Ansprüche 1 bis 11, **dadurch gekennzeichnet, dass** die akustischen Signale mit mindestens einem Beschleunigungssensor mit einer neutralen Achse (2a) erfasst werden und jeder Beschleunigungssensor derart angeordnet wird, dass die Förderrichtung (13) des Granulats im Augenblick des Anpralls mit der neutralen Achse (2a) übereinstimmt.

13. Verfahren nach einem der Ansprüche 1 bis 12, **dadurch gekennzeichnet, dass** vor Beginn der Signalverarbeitung der elektrischen Signale zum Bestimmen der Korngrößenverteilung eine Kalibrierfunktion erstellt wird, in dem folgende Schritte durchgeführt werden:
- Umwandeln der von dem Schwingungsaufnehmer (2) erfassten elektrischen Signale mit einem Analog-/Digitalwandler in digitale Rohsignale,
- Filtern der Rohsignale mit einem Bandpassfilter,
- Bilden gleitender Effektivwerte der Signalstärke aus den gefilterten Rohsignalen,
- Logarithmieren der Effektivwerte,
- Klassieren der logarithmierten Effektivwerte in mehrere Klassen mit unterschiedlicher Signalstärke,
- Ermitteln einer Korrelation zwischen der Summenverteilung der Effektivwerte in den vorgenannten Klassen und der mit einer herkömmlichen Methode zur Bestimmung der Korngrößenverteilung bestimmten Korngrößenverteilung des Granulats.

14. Verfahren nach Anspruch 13, **dadurch gekennzeichnet, dass** die Signalverarbeitung der elektrischen Signale zum Bestimmen der Korngrößenverteilung folgende Schritte umfasst:
- Umwandeln der von dem Schwingungsaufnehmer erfassten elektrischen Signale mit einem Analog-/Digitalwandler in digitale Rohsignale,
- Filtern der Rohsignale mit einem Bandpassfilter,
- Bilden gleitender Effektivwerte der Signalstärke aus den gefilterten Rohsignalen,
- Logarithmieren der Effektivwerte,
- Klassieren der logarithmierten Effektivwerte in mehrere Klassen mit unterschiedlicher Signalstärke,
- Ermitteln der Korngrößenverteilung mit Hilfe der Kalibrierfunktion aus der Summenverteilung der Effektivwerte in den vorgenannten Klassen.

15. Verfahren nach einem der Ansprüche 1 bis 12, **dadurch gekennzeichnet, dass** vor Beginn der Signalverarbeitung der elektrischen Signale zum Bestimmen der Korngrößenverteilung mehrere Kalibrierfunktionen erstellt werden, in dem für N Proben des Förderstroms mit unterschiedlichen Korngrößenverteilungen jeweils eine Kalibrierfunktion erstellt wird, in dem für jede Probe 1 - N folgende Schritte durchgeführt werden:
- Umwandeln der von dem Schwingungsaufnehmer erfassten elektrischen Signale mit einem Analog-/Digitalwandler in digitale Rohsignale,
- Filtern der Rohsignale mit einem Bandpassfilter,
- Bilden gleitender Effektivwerte der Signalstärke aus den Rohsignalen,
- Logarithmieren der Effektivwerte,
- Klassierung der logarithmierten Effektivwerte in mehrere Klassen mit unterschiedlicher Signalstärke,
- Ermitteln einer Korrelation zwischen der Summenverteilung der Effektivwerte in den vorgenannten Klassen und der mit einer herkömmlichen Methode zur Bestimmung der Korngrößenverteilung bestimmten Korngrößenverteilung des Granulats der jeweiligen Probe,
- Speichern der ermittelten Korrelation für jede Probe 1 - N als Kalibrierfunktion 1 - N in einer Datenbank,
- Erstellen einer Zuordnungsfunktion, in dem für jede Probe 1 - N folgende Schritte durchgeführt werden:
- Unterziehen der Rohsignale jeder Probe 1 - N einer diskreten Fourier Transformation (DFT),
- Bilden eines Mittelwertes und Ermittlung von Frequenzkomponenten aus der für jede Probe 1 - N erzeugten DFT,
- Bilden einer DFT-Matrix aus den Frequenzkomponenten der Proben 1 - N,
- Unterziehen der DFT-Matrix einer Hauptkomponentenanalyse zur Ermittlung der Werte der Hauptkomponenten (PC1 ... PCM) für jede Probe 1 - N und von Hauptkomponenten-Koeffizienten (Loading Matrix),
- Speichern der Hauptkomponenten-Koeffizienten (Loading Matrix) und der Werte der Hauptkomponenten (PC1 ... PCM) für jede Probe 1 - N in einer Datenbank,
- Zuordnen der Werte der Hauptkomponenten (PC1 ... PCM) zu der für die jeweilige Probe ermittelten Kalibrierfunktion 1 - N.

16. Verfahren nach Anspruch 15, **dadurch gekennzeichnet, dass** die Signalverarbeitung der elektrischen Signale zum Bestimmen der Korngrößenverteilung folgende Schritte umfasst:
- Umwandeln der von dem Schwingungsaufnehmer (2) erfassten elektrischen Signale mit einem Analog-/Digitalwandler in digitale Rohsignale,
- Filtern der Rohsignale mit einem Bandpassfilter,
- Bilden gleitender Effektivwerte der Signalstärke aus den gefilterten normierten Rohsignalen,
- Logarithmieren der Effektivwerte,
- Aufteilen der logarithmierten Effektivwerte in mehrere Klassen mit unterschiedlicher Signalstärke,
- Zusätzliches Unterziehen der normierten Rohsignale einer diskreten Fourier Transformation (DFT),
- Bilden eines Mittelwertes und Ermittlung von Frequenzkomponenten aus der erzeugten DFT,
- Ermittlung der Werte der Hauptkomponenten (PC1 - PCM) durch Multiplizieren der Frequenzkomponenten mit den in der Datenbank gespeicherten Hauptkomponenten-Koeffizienten (Loading Matrix),
- Berechnen einer Differenz zwischen den ermittelten Werten der Hauptkomponenten und den in der Datenbank gespeicherten Werten der Hauptkomponenten (PC1 - PCM) für jede Probe 1 - N,
- Auswählen der Kalibrierfunktion 1 - N, die derjenigen Probe 1- N zugeordnet ist, für die die Differenz zu den ermittelten Werten der Hauptkomponenten am geringsten ist,
- Ermitteln der Korngrößenverteilung mit der ausgewählten Kalibrierfunktion 1 - N aus der Summenverteilung der Effektivwerte in den vorgenannten Klassen.

17. Vorrichtung zum Bestimmen der Korngrößenverteilung von Granulaten bestehend aus Feststoffpartikeln (24) mit unterschiedlichen Korngrößen umfassend
- eine Fördereinrichtung zum Bewegen der Feststoffpartikel in einer Förderrichtung (13) in einen Förderstrom,
- Steuerungsmittel, eingerichtet zum Konstanthalten der Strömungsenergie des Förderstroms, wobei die Strömungsenergie durch die Geschwindigkeit und Konzentration bzw. Schüttdichte der Feststoffpartikel (24) des Granulats bestimmt wird,
- mindestens einen in dem Förderstrom mit konstanter Strömungsenergie angeordneten Anprallkörper (1), der akustische Signale aufgrund kollidierender Feststoffpartikel (24) erzeugt,
- einen mit jedem Anprallkörper (1) verbundenen Schwingungsaufnehmers (2) zum Erfassen der akustischen Signale und Umformen in elektrische Signale,
- eine Signalverarbeitungseinheit eingerichtet zur Signalverarbeitung der elektrischen Signale jedes Schwingungsaufnehmers (2) zur Bestimmung der Korngrößenverteilung,
- wobei die Fördereinrichtung einen Behälter (34) für die Aufnahme einer Dispersion umfassend die Feststoffpartikel (24) und ein flüssiges Dispersionsmedium sowie ein um eine Drehachse drehbares Rührwerkzeug (36) umfasst,
- wobei die Steuerungsmittel einen Antrieb (38) für das Rührwerkzeug (36) umfassen, der zur Erzeugung einer Drehbewegung der Dispersion mit konstanter Geschwindigkeit bei bekannter Menge an Feststoffpartikeln und flüssigem Dispersionsmedium eingerichtet ist und
- der Anprallkörper (1) in einem radialen Abstand von der Drehachse des Rührwerkzeugs (36) angeordnet ist.

18. Vorrichtung zum Bestimmen der Korngrößenverteilung von Granulaten bestehend aus Feststoffpartikeln (24) mit unterschiedlichen Korngrößen umfassend
- eine Fördereinrichtung zum Bewegen der Feststoffpartikel in einer Förderrichtung (13) in einen Förderstrom,
- Steuerungsmittel, eingerichtet zum Konstanthalten der Strömungsenergie des Förderstroms, wobei die Strömungsenergie durch die Geschwindigkeit und Konzentration bzw. Schüttdichte der Feststoffpartikel (24) des Granulats bestimmt wird,
- mindestens einen in dem Förderstrom mit konstanter Strömungsenergie angeordneten Anprallkörper (1), der akustische Signale aufgrund kollidierender Feststoffpartikel (24) erzeugt,
- einen mit jedem Anprallkörper (1) verbundenen Schwingungsaufnehmers (2) zum Erfassen der akustischen Signale und Umformen in elektrische Signale,
- eine Signalverarbeitungseinheit eingerichtet zur Signalverarbeitung der elektrischen Signale jedes Schwingungsaufnehmers (2) zur Bestimmung der Korngrößenverteilung,
- wobei die Steuerungsmittel eine Dispergiereinheit (26) umfassen, wobei
- die Dispergiereinheit (26) eine Mischkammer (26a), einen Einlass (26b) für ein gasförmiges Dispersionsmedium in die Mischkammer (26a), einen Einlass für die Feststoffpartikel (26b) und einen Auslass (26d) für die Dispersion aus der Mischkammer (26a) aufweist,
- der Auslass (26d) auf den Anprallkörper (1) ausgerichtet ist und
- der Einlass (26b) mit einer Zufuhr für das Dispersionsmedium verbunden ist, die zum Zuführen des Dispersionsmediums mit konstantem Volumenstrom eingerichtet ist.

19. Vorrichtung nach Anspruch 18, **dadurch gekennzeichnet, dass**
- an den Einlass für die Feststoffpartikel (26b) der Dispergiereinheit eine Saugvorrichtung (27) mit einer Einlassöffnung (27a) angeschlossen ist,
- die Steuerungsmittel außerdem eine rinnenartige Vertiefung zur Aufnahme von Feststoffpartikeln (24) umfassen,
- die rinnenartige Vertiefung und die Einlassöffnung (27a) der Saugvorrichtung (27) relativ zueinander in Richtung der Längserstreckung der Vertiefung und mit konstantem Abstand zwischen der Einlassöffnung (27a) und der Vertiefung beweglich angeordnet sind und
- die Steuerungsmittel außerdem einen Antrieb (21) umfassen, der zur Erzeugung der Relativbewegung zwischen der Vertiefung und der Einlassöffnung (27a) mit konstanter Geschwindigkeit eingerichtet ist.

20. Vorrichtung nach Anspruch 18, **dadurch gekennzeichnet, dass**
- die Steuerungsmittel einen Stetigförderer zum Fördern von Feststoffpartikel (24) umfassen,
- an den Einlass (26c) für Feststoffpartikel der Dispergiereinheit (26) ein Ende einer Saugleitung (27b) angeschlossen ist,
- das andere Ende der Saugleitung (27b) an einen Saugkopf (27c) angeschlossen ist,
- wobei der Saugkopf (27c) gegenüber der ortsfest gehalterten Dispergiereinheit (26) beweglich angeordnet ist, so dass der Saugkopf (27c) Höhenschwankungen des Massestroms auf dem Stetigförderer folgen kann.

21. Vorrichtung nach Anspruch 18, **dadurch gekennzeichnet, dass**
- der Einlass (26c) für Feststoffpartikel der Dispergiereinheit (26) über eine Leitung (42) mit einem Behälter (43) zur Aufnahme der Feststoffpartikel (24) verbunden ist,
- der Behälter (43) eine Befüllöffnung(45) aufweist, die mit dem Auslass einer Pumpe (46) verbunden ist, die saugseitig an die Rohrleitung (47) eines pneumatischen Strömungsförderers (48) für einen pneumatischen Transport von Feststoffpartikeln (24) angeschlossen ist.

22. Vorrichtung nach Anspruch 21, **dadurch gekennzeichnet, dass**
- der Anprallkörper (1) in einer allseitig geschlossenen Einhausung (49) angeordnet ist und
- in Förderrichtung (13) hinter dem Anprallkörper (1) ein Auslass für die Feststoffpartikel (24) in der Einhausung (49) angeordnet ist, der über eine mit einem Absperrelement (50) versehene Rückführleitung (51) mit dem pneumatischen Strömungsförderer (48) verbunden ist.

23. Vorrichtung zum Bestimmen der Korngrößenverteilung von Granulaten bestehend aus Feststoffpartikeln (24) mit unterschiedlichen Korngrößen umfassend
- eine Fördereinrichtung zum Bewegen der Feststoffpartikel in einer Förderrichtung (13) in einen Förderstrom,
- Steuerungsmittel, eingerichtet zum Konstanthalten der Strömungsenergie des Förderstroms, wobei die Strömungsenergie durch die Geschwindigkeit und Konzentration bzw. Schüttdichte der Feststoffpartikel (24) des Granulats bestimmt wird,
- mindestens einen in dem Förderstrom mit konstanter Strömungsenergie angeordneten Anprallkörper (1), der akustische Signale aufgrund kollidierender Feststoffpartikel (24) erzeugt,
- einen mit jedem Anprallkörper (1) verbundenen Schwingungsaufnehmers (2) zum Erfassen der akustischen Signale und Umformen in elektrische Signale,
- eine Signalverarbeitungseinheit eingerichtet zur Signalverarbeitung der elektrischen Signale jedes Schwingungsaufnehmers (2) zur Bestimmung der Korngrößenverteilung,
- wobei die Fördereinrichtung ein Stetigförderer ist und die Steuerungsmittel einen gestellfest an dem Stetigförderer angeordneten Abstreifer umfassen.

24. Vorrichtung zum Bestimmen der Korngrößenverteilung von Granulaten bestehend aus Feststoffpartikeln (24) mit unterschiedlichen Korngrößen umfassend
- eine Fördereinrichtung zum Bewegen der Feststoffpartikel in einer Förderrichtung (13) in einen Förderstrom,
- Steuerungsmittel, eingerichtet zum Konstanthalten der Strömungsenergie des Förderstroms, wobei die Strömungsenergie durch die Geschwindigkeit und Konzentration bzw. Schüttdichte der Feststoffpartikel (24) des Granulats bestimmt wird,
- mindestens einen in dem Förderstrom mit konstanter Strömungsenergie angeordneten Anprallkörper (1), der akustische Signale aufgrund kollidierender Feststoffpartikel (24) erzeugt,
- einen mit jedem Anprallkörper (1) verbundenen Schwingungsaufnehmers (2) zum Erfassen der akustischen Signale und Umformen in elektrische Signale,
- eine Signalverarbeitungseinheit eingerichtet zur Signalverarbeitung der elektrischen Signale jedes Schwingungsaufnehmers (2) zur Bestimmung der Korngrößenverteilung,
- wobei die Fördereinrichtung einen Behälter (53) für die Aufnahme einer Dispersion umfassend die Feststoffpartikel (24) und ein flüssiges Dispersionsmedium sowie ein Rührwerkzeug (54a) umfasst,
- die Steuerungsmittel einen Antrieb (54b) für das Rührwerkzeug (54a) umfassen, der zur Erzeugung einer Drehbewegung der Dispersion mit konstanter Geschwindigkeit eingerichtet ist,
- die Steuerungsmittel eine erste steuerbare Pumpe (4) umfassen, die zum diskontinuierlichen Befüllen des Behälters (53) mit einem konstanten Volumen der Dispersion eingerichtet ist,
- der Anprallkörper (1) in einem radialen Abstand von der Drehachse des Rührwerkzeugs (54a) in dem Behälter (53) angeordnet ist,
- die Vorrichtung eine Waage (58) zum Erfassen der Masse der in den Behälter (53) gefüllten Dispersion aufweist und
- die Signalverarbeitungseinheit derart konfiguriert ist, dass im Rahmen der Signalverarbeitung aus der von der Waage (58) erfassten Masse der Dispersion der Anteil der Feststoffpartikel ermittelt wird, der proportional zur Konzentration der Feststoffpartikel in der Dispersion ist und die die Signalverarbeitung der elektrischen Signale jedes Schwingungsaufnehmers (2)zur Bestimmung der Korngrößenverteilung unter Berücksichtigung der Konzentration erfolgt.

## Claims

1. Method for determining the particle size distribution of granular material consisting of solid particles (24) having different particle sizes comprising the steps:
- moving the solid particles (24) in a delivery direction (13) in a delivery flow,
- controlling the flow energy of the delivery flow in such a manner that this is kept constant,
- wherein the flow energy is determined by the velocity and concentration or bulk density of the solid particles (24) of the granular material,
- wherein the solid particles (24) in the delivery flow having constant flow energy collide with at least one impact body (1) adapted as a waveguide and generate acoustic signals which propagate in each impact body (1) as solid-borne sound waves,
- recording the acoustic signals and converting into electrical signals with the aid of at least one vibration sensor (2) and
- signal processing of the electrical signals of each vibration sensor (2) to determine the particle size distribution
- wherein the flow energy is kept constant whereby
- a container (34) is filled discontinuously with a constant quantity of solid particles (24) as disperse phase and a constant quantity of a liquid dispersion medium and
- the dispersion is set into a rotational motion at constant speed so that the solid particles (24) in the dispersion collide with the impact body (1) projecting into the container (34).

2. Method for determining the particle size distribution of granular material consisting of solid particles (24) having different particle sizes comprising the steps:
- moving the solid particles (24) in a delivery direction (13) in a delivery flow,
- controlling the flow energy of the delivery flow in such a manner that this is kept constant,
- wherein the flow energy is determined by the velocity and concentration or bulk density of the solid particles (24) of the granular material,
- wherein the solid particles (24) in the delivery flow having constant flow energy collide with at least one impact body (1) adapted as a waveguide and generate acoustic signals which propagate in each impact body (1) as solid-borne sound waves,
- recording the acoustic signals and converting into electrical signals with the aid of at least one vibration sensor (2) and
- signal processing of the electrical signals of each vibration sensor (2) to determine the particle size distribution
- wherein the flow energy is kept constant whereby the solid particles (24) as disperse phase in a mixing chamber (26a) of a dispersing unit (26) are mixed with a gaseous dispersion medium fed to the mixing chamber (26a) with a constant volume flow, and the outlet (26d) of the dispersing unit (26) is aligned for dispersion into the impact body (1).

3. The method according to claim 2, **characterized in that** the dispersing unit (26) sucks in the solid particles (24) via a suction device (27) connected to the mixing chamber (26a), wherein an inlet opening (27a) of the suction device (27) is moved at constant speed and with constant distance relative to a trough-like recess filled uniformly with solid particles (24) in the direction of the longitudinal extension thereof.

4. The method according to claim 2, **characterized in that** the dispersing unit (26) sucks in the solid particles (24) via a suction device (27) connected to the mixing chamber (26a), the solid particles (24) are removed from a continuous mass flow of solid particles (24) with the suction device (27), wherein the suction device (27) comprises a suction head (27c) arranged on a suction line (27b) which rests on the surface of the mass flow during removal of the solid particles (24), wherein the suction device (27) is adapted in such a manner that the suction head (27c) can follow height fluctuations of the mass flow.

5. The method according to claim 2, **characterized in that** the suction side of the dispersing unit (26) is connected via a line (42) to a container (43) which is filled discontinuously with a previously specified quantity of the solid particles (24), wherein the specified quantity of the solid particles is removed from a delivery flow of solid particles (24) in a pneumatic flow conveyor (48) at constant speed and over a specified time interval.

6. The method according to claim 5, **characterized in that** the removal is accomplished with a pump (46) which is connected on the suction side to the pipeline (47) of the flow conveyor (48) and on the outlet side to the container (43) and the removed quantity of solid particles (24) is fed back to the pneumatic flow conveyor (48) again after recording the acoustic signals.

7. Method for determining the particle size distribution of granular material consisting of solid particles (24) having different particle sizes comprising the steps:
- moving the solid particles (24) in a delivery direction (13) in a delivery flow,
- controlling the flow energy of the delivery flow in such a manner that this is kept constant,
- wherein the flow energy is determined by the velocity and concentration or bulk density of the solid particles (24) of the granular material,
- wherein the solid particles (24) in the delivery flow having constant flow energy collide with at least one impact body (1) adapted as a waveguide and generate acoustic signals which propagate in each impact body (1) as solid-borne sound waves,
- recording the acoustic signals and converting into electrical signals with the aid of at least one vibration sensor (2) and
- signal processing of the electrical signals of each vibration sensor (2) to determine the particle size distribution
- wherein the flow energy is kept constant whereby the mass flow of solid particles (24) is kept constant on a continuous conveyor with the aid of a wiper arranged on the continuous conveyor in a frame-fixed manner.

8. The method according to claim 7, **characterized in that** the wiper is attached to the continuous conveyor in a frame-fixed manner at a height such that it always rests on the surface of the delivery flow taking into account the maximum height fluctuations of the delivery flow to be expected upstream of the wiper and the solid particles (24) of the delivery flow having constant flow energy collide with at least one impact body (1) which dips into the delivery flow.

9. The method according to claim 7, **characterized in that** the wiper is attached to the continuous conveyor in a frame-fixed manner at a height such that it always rests on the surface of the delivery flow taking into account the maximum height fluctuations of the delivery flow to be expected upstream of the wiper and the solid particles (24) of the delivery flow having constant flow energy collide with at least one impact body (1) arranged in the freely falling delivery flow downstream of the transfer (15a) of the continuous conveyor.

10. The method for determining the particle size distribution of granular material consisting of solid particles (24) having different particle sizes comprising the steps:
- moving the solid particles (24) in a delivery direction (13) in a delivery flow,
- controlling the flow energy of the delivery flow in such a manner that this is kept constant,
- wherein the flow energy is determined by the velocity and concentration or bulk density of the solid particles (24) of the granular material,
- wherein the solid particles (24) in the delivery flow having constant flow energy collide with at least one impact body (1) adapted as a waveguide and generate acoustic signals which propagate in each impact body (1) as solid-borne sound waves,
- recording the acoustic signals and converting into electrical signals with the aid of at least one vibration sensor (2) and
- signal processing of the electrical signals of each vibration sensor (2) to determine the particle size distribution
- wherein the flow energy is kept constant whereby
- a container (53) is filled discontinuously with a constant volume of a dispersion comprising the solid particles (24) as disperse phase and a liquid dispersion medium,
- the mass of the dispersion in the container (53) is weighed,
- the dispersion is set into a rotational motion at constant speed,
- in the course of the signal processing the fraction of the solid particles (24) that is proportional to the concentration of the solid particles in the dispersion is determined from the mass of the dispersion in the container (53)
- and the signal processing of the electrical signals of each vibration sensor (2) is accomplished to determine the particle size distribution of the concentration.

11. The method according to claim 10, **characterized in that** the constant volume of the dispersion is removed from a delivery flow of solid particles in a hydraulic flow conveyor (52) at a constant removal rate and over a specified time interval, the removal is accomplished by means of a pump (55) which is connected on the suction side to the pipeline (47) of the hydraulic flow conveyor (52) and on the outlet side to the container (53) and after recording the acoustic signals the removed quantity of the dispersion is fed back to the hydraulic flow conveyor (52).

12. The method according to one of claims 1 to 11, **characterized in that** the acoustic signals are recorded by means of at least one acceleration sensor having a neutral axis (2a) and each acceleration sensor is arranged in such a manner that the delivery direction (13) of the granular material at the instant of impact coincides with the neutral axis (2a).

13. The method according to one of claims 1 to 12, **characterized in that** before the beginning of the signal processing of the electrical signals to determine the particle size distribution a calibrating function is created in which the following steps are carried out:
- converting the electrical signals recorded by the vibration sensor (2) using an analog/digital converter into digital raw signals,
- filtering the raw signals using a bandpass filter,
- forming sliding effective values of the signal intensity from the filtered raw signals,
- logarithmizing the effective values,
- classifying the logarithmized effective values into several classes having different signal intensity,
- determining a correlation between the sum distribution of the effective values in the aforesaid classes and the particle size distribution of the granular material determined using a conventional method for determining the particle size distribution.

14. The method according to claim 13, **characterized in that** the signal processing of the electrical signals to determine the particle size distribution comprises the following steps:
- converting the electrical signals recorded by the vibration sensor using an analog/digital converter into digital raw signals,
- filtering the raw signals using a bandpass filter,
- forming sliding effective values of the signal intensity from the filtered raw signals,
- logarithmizing the effective values,
- classifying the logarithmized effective values into several classes having different signal intensity,
- determining the particle size distribution with the aid of the calibrating function from the sum distribution of the effective values in the aforesaid classes.

15. The method according to one of claims 1 to 12, **characterized in that** before the beginning of the signal processing of the electrical signals to determine the particle size distribution several calibrating functions are created in which for N samples of the delivery flow with different particle size distributions respectively one calibrating function is created in which for each 1 - N sample the following steps are carried out:
- converting the electrical signals recorded by the vibration sensor using an analog/digital converter into digital raw signals,
- filtering the raw signals using a bandpass filter,
- forming sliding effective values of the signal intensity from the filtered raw signals,
- logarithmizing the effective values,
- classifying the logarithmized effective values into several classes having different signal intensity,
- determining a correlation between the sum distribution of the effective values in the aforesaid classes and the particle size distribution of the granular material determined using a conventional method for determining the particle size distribution,
- storing the determined correlation for each 1 - N sample as a 1 - N calibrating function in a database,
- creating an assignment function in which the following steps are carried out for each 1 - N sample:
- subjecting the raw signals of each 1 - N sample to a discrete Fourier transformation (DFT),
- forming an average and determining frequency components from the DFT generated for each 1 - N sample,
- forming a DFT matrix from the frequency components of the 1 - N samples,
- subjecting the DFT matrix to a principal component analysis to determine the values of the principal components (PC1...PCM) for each 1 - N sample and of principal component coefficients (loading matrix),
- storing the principal component coefficients (loading matrix) and the values of the principal components (PC1...PCM) for each 1-N sample in a database,
- assigning the values of the principal components (PC1...PCM) to the 1 - N calibrating function determined for the respective sample.

16. The method according to claim 15, **characterized in that** the signal processing of the electrical signals to determine the grain size distribution comprises the following steps:
- converting the electrical signals recorded by the vibration sensor (2) using an analog/digital converter into digital raw signals,
- filtering the raw signals using a bandpass filter,
- forming sliding effective values of the signal intensity from the filtered normalized raw signals,
- logarithmizing the effective values,
- dividing the logarithmized effective values into several classes having different signal intensity,
- additionally subjecting the normalized raw signals to a discrete Fourier transformation (DFT),
- forming an average and determining frequency components from the generated DFT,
- determining the values of the principal components (PC1-PCM) by multiplying the frequency components by the principal component coefficients (loading matrix) stored in the database,
- calculating a difference between the determined values of the principal components and the values of the principal components (PC1 - PCM) stored in the database for each 1 - N sample,
- selecting the calibrating function 1 - N which is assigned to that 1 - N sample for which the difference from the determined values of the principal components is the smallest,
- determining the grain size distribution with the selected calibrating function 1 - N from the sum distribution of the effective values in the aforesaid classes.

17. Apparatus for determining the particle size distribution of granular material consisting of solid particles (24) having different grain sizes comprising
- a delivery device for moving the solid particles in a delivery direction (13) in a delivery flow,
- control means adapted to keep the flow energy of the delivery flow constant, wherein the flow energy is determined by the velocity and concentration or bulk density of the solid particles (24) of the granular material,
- at least one impact body (1) arranged in the delivery flow with constant flow energy which generates acoustic signals as a result of colliding solid particles (24),
- a vibration sensor (2) connected to each impact body (1) to record the acoustic signals and convert into electrical signals,
- a signal processing unit adapted for the signal processing of the electrical signals of each vibration sensor (2) to determine the particle size distribution,
- wherein the delivery device comprises a container (34) for receiving a dispersion comprising the solid particles (24) and a liquid dispersion medium as well as stirring tool (36) which is rotatable about an axis of rotation,
- wherein the control means comprise a drive (38) for the stirring tool (36) which is adapted to produce a rotational movement of the dispersion at constant velocity with a known quantity of solid particles and liquid dispersion medium, and
- the impact body (1) is arranged at a radial distance from the axis of rotation of the stirring tool (36).

18. Apparatus for determining the particle size distribution of granular material consisting of solid particles (24) having different grain sizes comprising
- a delivery device for moving the solid particles in a delivery direction (13) in a delivery flow,
- control means adapted to keep the flow energy of the delivery flow constant, wherein the flow energy is determined by the velocity and concentration or bulk density of the solid particles (24) of the granular material,
- at least one impact body (1) arranged in the delivery flow with constant flow energy which generates acoustic signals as a result of colliding solid particles (24),
- a vibration sensor (2) connected to each impact body (1) to record the acoustic signals and convert into electrical signals,
- a signal processing unit adapted for the signal processing of the electrical signals of each vibration sensor (2) to determine the particle size distribution,
- wherein the control means comprise a dispersing unit (26), wherein
- the dispersing unit (26) comprises a mixing chamber (26a), an inlet (26b) for a gaseous dispersion medium into the mixing chamber (26a), an inlet for the solid particles (26b) and an outlet (26d) for the dispersion from the mixing chamber (26a),
- the outlet (26d) is aligned onto the impact body (1) and
- the inlet (26b) is connected to a feed for the dispersion medium which is adapted for supplying the dispersion medium with constant volume flow.

19. The apparatus according to claim 18, **characterized in that**
- a suction device (27) with an inlet opening (27a) is connected to the inlet for the solid particles (26b) of the dispersing unit,
- the control means additionally comprises a trough-like recess for receiving solid particles (24),
- the trough-like recess and the inlet opening (27a) of the suction device (27) are arranged movably relative to one another in the direction of the longitudinal extension of the recess and with a constant distance between the inlet opening (27a) and the recess and
- the control means additionally comprise a drive (21) which is adapted to generate the relative movement between the recess and the inlet opening (27a) at constant velocity.

20. The apparatus according to claim 18, **characterized in that**
- the control means comprise a continuous conveyor for delivering solid particles (24),
- one end of a suction line (27b) is connected to the inlet (26c) for solid particles of the dispersing unit (26),
- the other end of the suction line (27b) is connected to a suction head (27c),
- wherein the suction head (27c) is arranged movably with respect to the dispersing unit (26) held in a fixed position so that the suction head (27c) can follow height fluctuations of the mass flow on the continuous conveyor.

21. The apparatus according to claim 18, **characterized in that**
- the inlet (26c) for solid particles of the dispersing unit (26) is connected via a line (42) to a container (43) for receiving the solid particles (24),
- the container (43) has a filling opening (45) which is connected to the outlet of a pump (46) which is connected on the suction side to the pipeline (47) of a pneumatic flow conveyor (48) for a pneumatic transport of solid particles (24) .

22. The apparatus according to claim 21, **characterized in that**
- the impact body (1) is arranged in a housing (49) which is closed on all sides and
- in the delivery direction (13) downstream of the impact body (1) an outlet for the solid particles (24) is arranged in the housing (49) which is connected to the pneumatic flow conveyor (48) via a return line (51) provided with a shutoff element (50).

23. Apparatus for determining the particle size distribution of granular material consisting of solid particles (24) having different grain sizes comprising
- a delivery device for moving the solid particles in a delivery direction (13) in a delivery flow,
- control means adapted to keep the flow energy of the delivery flow constant, wherein the flow energy is determined by the velocity and concentration or bulk density of the solid particles (24) of the granular material,
- at least one impact body (1) arranged in the delivery flow with constant flow energy which generates acoustic signals as a result of colliding solid particles (24),
- a vibration sensor (2) connected to each impact body (1) to record the acoustic signals and convert into electrical signals,
- a signal processing unit adapted for the signal processing of the electrical signals of each vibration sensor (2) to determine the particle size distribution,
- wherein the delivery device is a continuous conveyor and the control means comprise a wiper arranged in a frame-fixed manner on the continuous conveyor.

24. Apparatus for determining the particle size distribution of granular material consisting of solid particles (24) having different grain sizes comprising
- a delivery device for moving the solid particles in a delivery direction (13) in a delivery flow,
- control means adapted to keep the flow energy of the delivery flow constant, wherein the flow energy is determined by the velocity and concentration or bulk density of the solid particles (24) of the granular material,
- at least one impact body (1) arranged in the delivery flow with constant flow energy which generates acoustic signals as a result of colliding solid particles (24),
- a vibration sensor (2) connected to each impact body (1) to record the acoustic signals and convert into electrical signals,
- a signal processing unit adapted for the signal processing of the electrical signals of each vibration sensor (2) to determine the particle size distribution,
- wherein the delivery device comprises a container (53) for receiving a dispersion comprising the solid particles (24) and a liquid dispersion medium as well as a stirring tool (54a),
- the control means comprise a drive (54b) for the stirring tool (54a) which is adapted to produce a rotational movement of the dispersion at constant velocity,
- the control means comprise a first controllable pump (4) which is adapted for the discontinuous filling of the container (53) with a constant volume of the dispersion,
- the impact body (1) is arranged at a radial distance from the axis of rotation of the stirring tool (54a) in the container (53),
- the apparatus has a set of scales (58) for recording the mass of the dispersion filled in the container (53) and
- the signal processing unit is configured in such a manner that in the course of the signal processing, the fraction of the solid particles which is proportional to the concentration of the solid particles in the dispersion is determined from the mass of the dispersion recorded by the set of scales (58) and which the signal processing of the electrical signals of each vibration sensor (2) accomplishes in order to determine the particle size distribution taking into account the concentration.

## Revendications

1. Procédé, destiné à déterminer la distribution granulométrique de granulés composés de particules solides (24) présentant différentes granulométries, comprenant les étapes
- déplacer les particules solides (24) dans une direction de convoyage (13) dans un flux de convoyage,
- commander l'énergie cinétique du flux de convoyage, de sorte qu'elle soit maintenue à un niveau constant,
- l'énergie cinétique étant déterminée par la vitesse et la concentration ou la densité apparente des particules solides (24) des granulés,
- les particules solides (24) dans le flux de convoyage entrant en collision avec une énergie cinétique constante avec au moins un corps récepteur de chocs (1), aménagé sous la forme d'un guide d'ondes et générant des signaux acoustiques qui se propagent dans chaque corps récepteur de chocs (1), sous la forme d'ondes sonores de structure,
- détecter les signaux acoustiques et les convertir en signaux électriques à l'aide d'au moins un capteur d'oscillations (2) et
- traiter les signaux électriques de chaque capteur d'oscillations (2) pour déterminer la distribution granulométrique,
- l'énergie cinétique étant maintenue à un niveau constant
- en ce qu'un réservoir (34) est rempli de manière discontinue d'une quantité constante des particules solides (24) sous la forme d'une phase dispersée et d'une quantité constante d'un milieu de dispersion liquide et
- en ce que la dispersion est amenée en rotation à vitesse constante, de sorte que les particules solides (24) dans la dispersion entrent en collision avec le corps récepteur de chocs (1) qui saillit dans le réservoir (34)

2. Procédé, destiné à déterminer la distribution granulométrique de granulés composés de particules solides (24) présentant différentes granulométries, comprenant les étapes
- déplacer les particules solides (24) dans une direction de convoyage (13) dans un flux de convoyage,
- commander l'énergie cinétique du flux de convoyage, de sorte qu'elle soit maintenue à un niveau constant,
- l'énergie cinétique étant déterminée par la vitesse et la concentration ou la densité apparente des particules solides (24) des granulés,
- les particules solides (24) dans le flux de convoyage entrant en collision avec une énergie cinétique constante avec au moins un corps récepteur de chocs (1) aménagé sous la forme d'un guide d'ondes et générant des signaux acoustiques qui se propagent dans chaque corps récepteur de chocs (1), sous la forme d'ondes sonores de structure,
- détecter les signaux acoustiques et les convertir en signaux électriques à l'aide d'au moins un capteur d'oscillations (2) et
- traiter les signaux électriques de chaque capteur d'oscillations (2) pour déterminer la distribution granulométrique,
- l'énergie cinétique étant maintenue à un niveau constant en ce que les particules solides (24) sous la forme d'une phase dispersée sont mélangées dans une chambre de mélange (26a) d'un module de dispersion (26) avec un milieu de dispersion gazeux, alimenté avec un débit volumétrique constant dans la chambre de mélange (26a) et la sortie (26d) du module de dispersion (26) étant orientée sur le corps récepteur de chocs (1) pour la dispersion.

3. Procédé selon la revendication 2, **caractérisé en ce que** le module de dispersion (26) aspire les particules solides (24) par l'intermédiaire d'un dispositif aspirant (27) relié avec la chambre de mélange (26a), un orifice d'entrée (27a) du dispositif aspirant (27) étant déplacé à vitesse constante et avec un écart constant par rapport à un creux en forme de rigole, rempli régulièrement de particules solides (24), dans la direction de l'extension longitudinale de celui-ci.

4. Procédé selon la revendication 2, **caractérisé en ce que** le module de dispersion (26) aspire les particules solides (24) par l'intermédiaire d'un dispositif aspirant (27) relié avec la chambre de mélange (26a), les particules solides (24) étant prélevées à partir d'un flux massique continu de particules solides (24) à l'aide du dispositif aspirant (27), le dispositif aspirant (27) comportant une tête aspirante (27c) placée sur un conduit aspirant (27b), qui pendant le prélèvement des particules solides (24) repose sur la surface du flux massique, le dispositif aspirant (27) étant aménagé de sorte que la tête aspirante (27c) soit susceptible de suivre des fluctuations en hauteur du flux massique.

5. Procédé selon la revendication 2, **caractérisé en ce que** le côté aspiration du module de dispersion (26) est relié via un conduit (42) avec un réservoir (43) qui est rempli de manière discontinue d'une quantité précédemment déterminée des particules solides (24), la quantité déterminée des particules solides étant prélevée dans un flux de convoyage de particules solides (24) dans un convoyeur de flux (48) pneumatique, à vitesse constante et sur une période déterminée.

6. Procédé selon la revendication 5, **caractérisé en ce que** le prélèvement s'effectue à l'aide d'une pompe (46) qui est raccordée côté aspiration sur la tuyauterie (47) du convoyeur de flux (48) et côté sortie sur le réservoir (43) et après la détection des signaux acoustiques, la quantité prélevée des particules solides (24) est ramenée vers le convoyeur de flux (48) pneumatique.

7. Procédé, destiné à déterminer en continu la distribution granulométrique de granulés composés de particules solides (24) présentant différentes granulométries, comprenant les étapes, consistant à
- déplacer les particules solides (24) dans une direction de convoyage (13) dans un flux de convoyage,
- commander l'énergie cinétique du flux de convoyage, de sorte qu'elle soit maintenue à un niveau constant,
- l'énergie cinétique étant déterminée par la vitesse et la concentration ou la densité apparente des particules solides (24) des granulés,
- les particules solides (24) dans le flux de convoyage entrant en collision avec une énergie cinétique constante avec au moins un corps récepteur de chocs (1), aménagé sous la forme d'un guide d'ondes et générant des signaux acoustiques qui se propagent dans chaque corps récepteur de chocs (1), sous la forme d'ondes sonores de structure,
- détecter les signaux acoustiques et les convertir en signaux électriques à l'aide d'au moins un capteur d'oscillations (2) et
- traiter les signaux électriques de chaque capteur d'oscillations (2) pour déterminer la distribution granulométrique,
- l'énergie cinétique étant maintenue à un niveau constant en ce que le flux massique de particules solides (24) est maintenu à un niveau constant sur un convoyeur continu à l'aide d'un racleur placé de manière stationnaire sur le châssis du convoyeur continu.

8. Procédé selon la revendication 7, **caractérisé en ce que** le racleur est monté de manière stationnaire sur le châssis du convoyeur continu à une hauteur telle, que sous considération des fluctuations en hauteur maximales attendues du flux de convoyage à l'avant du racleur, il repose toujours sur la surface du flux de convoyage et que les particules solides (24) du flux de convoyage entrent en collision avec une énergie cinétique constante avec au moins un corps récepteur de chocs (1), immergé dans le flux de convoyage.

9. Procédé selon la revendication 7, **caractérisé en ce que** le racleur est monté de manière stationnaire sur le châssis du convoyeur continu à une hauteur telle, que sous considération des fluctuations en hauteur maximales attendues du flux de convoyage à l'avant du racleur, il repose toujours sur la surface du flux de convoyage et que les particules solides (24) du flux de convoyage entrent en collision avec une énergie cinétique constante avec au moins un corps récepteur de chocs (1) placé derrière le transfert (15a) du convoyeur continu, dans le flux de convoyage en chute libre.

10. Procédé, destiné à déterminer la distribution granulométrique de granulés composés de particules solides (24) présentant différentes granulométries, comprenant les étapes
- déplacer les particules solides (24) dans une direction de convoyage (13) dans un flux de convoyage,
- commander l'énergie cinétique du flux de convoyage, de sorte qu'elle soit maintenue à un niveau constant,
- l'énergie cinétique étant déterminée par la vitesse et la concentration ou la densité apparente des particules solides (24) des granulés,
- les particules solides (24) dans le flux de convoyage entrant en collision avec une énergie cinétique constante avec au moins un corps récepteur de chocs (1), aménagé sous la forme d'un guide d'ondes et générant des signaux acoustiques qui se propagent dans chaque corps récepteur de chocs (1), sous la forme d'ondes sonores de structure,
- détecter les signaux acoustiques et les convertir en signaux électriques à l'aide d'au moins un capteur d'oscillations (2) et
- traiter les signaux électriques de chaque capteur d'oscillations (2) pour déterminer la distribution granulométrique,
- l'énergie cinétique étant maintenue à un niveau constant
- en ce qu'un réservoir (53) est rempli de manière discontinue d'une quantité constante des particules solides (24), sous la forme d'une phase dispersée et d'une quantité constante d'un milieu de dispersion liquide et,
- la masse de la dispersion dans le réservoir (53) est pesée,
- la dispersion est amenée en rotation à vitesse constante,
- dans le cadre du traitement des signaux, à partir de la masse de la dispersion dans le réservoir (53), la part des particules solides (24) qui est proportionnelle à la concentration des particules solides dans la dispersion est déterminée,
- et le traitement des signaux électriques de chaque capteur d'oscillations (2) est effectué pour déterminer la distribution granulométrique, sous considération de la concentration.

11. Procédé selon la revendication 10, **caractérisé en ce que** le volume constant de la dispersion est prélevé dans un flux de convoyage de particules solides dans un convoyeur de flux (52) hydraulique, à une vitesse de prélèvement constante et sur une période déterminée, le prélèvement s'effectue à l'aide d'une pompe (55) qui côté aspiration, est raccordée sur la tuyauterie (47) du convoyeur de flux (52) hydraulique et côté sortie, est raccordée sur le réservoir (53) et après la détection des signaux acoustiques, la quantité prélevée de la dispersion est ramenée vers le convoyeur de flux (52) hydraulique.

12. Procédé selon l'une quelconque des revendications 1 à 11, **caractérisé en ce que** les signaux acoustiques sont détectés à l'aide d'au moins un capteur d'accélération avec un axe neutre (2a) et chaque capteur d'accélération est placé de telle sorte que la direction de convoyage (13) des granulés à l'instant de la collision coïncide avec l'axe neutre (2a).

13. Procédé selon l'une quelconque des revendications 1 à 12, **caractérisé en ce qu'**avant le début du traitement des signaux électriques, pour déterminer la distribution granulométrique, une fonction de calibrage est établie, **en ce que** sont réalisées les étapes suivantes:
- convertir les signaux électriques détectés par le capteur d'oscillations (2) en signaux bruts numériques, à l'aide d'un convertisseur analogique/numérique,
- filtrer les signaux bruts normalisés à l'aide d'un filtre passe-bande,
- créer des valeurs effectives pondérées de l'intensité des signaux à partir des signaux bruts filtrés,
- calculer un logarithme des valeurs effectives,
- classer les valeurs effectives logarithmiques en plusieurs classes à différente intensité des signaux,
- rechercher une corrélation entre la distribution cumulative des valeurs effectives dans les classes précédemment citées et la distribution granulométrique des granulés, déterminée à l'aide d'une méthode conventionnelle de détermination de la distribution granulométrique.

14. Procédé selon la revendication 13, **caractérisé en ce que** le traitement des signaux électriques pour déterminer la distribution granulométrique comprend les étapes suivantes:
- convertir les signaux électriques détectés par le capteur d'oscillations en signaux bruts numériques, à l'aide d'un convertisseur analogique/numérique,
- filtrer les signaux bruts normalisés à l'aide d'un filtre passe-bande,
- créer des valeurs effectives pondérées de l'intensité des signaux à partir des signaux bruts filtrés,
- calculer un logarithme des valeurs effectives,
- classer les valeurs effectives logarithmiques en plusieurs classes à différente intensité des signaux,
- rechercher la distribution granulométrique à l'aide de la fonction de calibrage, à partir de la distribution cumulative des valeurs effectives dans les classes précédemment citées.

15. Procédé selon l'une quelconque des revendications 1 à 12, **caractérisé en ce qu'**avant le début du traitement des signaux électriques, pour déterminer la distribution granulométrique, plusieurs fonctions de calibrage sont établies, **en ce que** pour N échantillons du flux de convoyage avec différentes distributions granulométriques, il est établi chaque fois une fonction de calibrage **en ce que** pour chaque échantillon 1 - N sont réalisées les étapes suivantes:
- convertir les signaux électriques détectés par le capteur d'oscillations en signaux bruts numériques, à l'aide d'un convertisseur analogique/numérique,
- filtrer les signaux bruts normalisés à l'aide d'un filtre passe-bande,
- créer des valeurs effectives pondérées de l'intensité des signaux à partir des signaux bruts,
- calculer un logarithme des valeurs effectives,
- classer les valeurs effectives logarithmiques en plusieurs classes à différente intensité des signaux,
- rechercher une corrélation entre la distribution cumulative des valeurs effectives dans les classes précédemment citées et la distribution granulométrique des granulés de l'échantillon concerné, déterminée à l'aide d'une méthode conventionnelle de détermination de la distribution granulométrique,
- mémoriser la corrélation recherchée pour chaque échantillon 1 - N en tant que fonction de calibrage 1 - N dans une base de données,
- établir une fonction d'affectation, **en ce que** pour chaque échantillon 1 - N sont réalisées les étapes suivantes:
- soumettre les signaux bruts de chaque échantillon 1 - N à une transformation de Fourier discrète (TFD),
- calculer une valeur moyenne et déterminer des composantes de fréquence à partir de la TFD créée pour chaque échantillon 1 - N,
- créer une matrice de TFD à partir des composantes de fréquence des échantillons 1 - N,
- soumettre la matrice de TFD à une analyse en composantes principales, pour rechercher les valeurs des composantes principales (CP1 ... CPM) pour chaque échantillon 1 - N et des coefficients de composantes principales (Loading Matrix),
- mémoriser les coefficients de composantes principales (Loading Matrix) et les valeurs des composantes principales (CP1 ... CPM) pour chaque échantillon 1 N dans une base de données,
- affecter les valeurs des composantes principales (ÇP1 ... CPM) à la fonction de calibrage 1 - N déterminée pour l'échantillon concerné.

16. Procédé selon la revendication 15, **caractérisé en ce que** le traitement des signaux électriques pour déterminer la distribution granulométrique comprend les étapes suivantes:
- convertir les signaux électriques détectés par le capteur d'oscillations (2) en signaux bruts numériques, à l'aide d'un convertisseur analogique/numérique,
- filtrer les signaux bruts à l'aide d'un filtre passe-bande,
- créer des valeurs effectives pondérées de l'intensité des signaux à partir des signaux bruts normalisés filtrés,
- calculer un logarithme des valeurs effectives,
- répartir les valeurs effectives logarithmiques en plusieurs classes à différente intensité des signaux,
- soumettre en supplément les signaux bruts normalisés à une transformation de Fourier discrète (TFD),
- calculer une valeur moyenne et déterminer des composantes de fréquence à partir de la TFD créée,
- rechercher les valeurs des composantes principales (CP1 - CPM) par multiplication des composantes de fréquence par les coefficients de composantes principales (Loading Matrix) mémorisés dans la base de données,
- calculer une différence entre les valeurs de composantes principales recherchées et les valeurs des composantes principales (CP1- CPM) mémorisées dans la base de données pour chaque échantillon 1 - N,
- sélectionner la fonction de calibrage 1 - N, qui est affectée à l'échantillon 1 - N pour lequel la différence par rapport aux valeurs des composantes principales recherchées est la plus faible,
- rechercher la distribution granulométrique à l'aide de la fonction de calibrage 1 - N sélectionnée, dans la distribution cumulative des valeurs effectives dans les classes précédemment citées.

17. Dispositif, destiné à déterminer la distribution granulométrique de granulés composés de particules solides (24) présentant différentes granulométries, comprenant
- un système de convoyage destiné à déplacer les particules solides dans une direction de convoyage (13) dans un flux de convoyage,
- des moyens de commande, aménagés pour maintenir à un niveau constant l'énergie cinétique du flux de convoyage, l'énergie cinétique étant déterminée par la vitesse et la concentration ou la densité apparente des particules solides (24) des granulés,
- au moins un corps récepteur de chocs (1), placé dans le flux de convoyage à énergie cinétique constante, qui génère des signaux acoustiques sur la base de particules solides (24) en collision,
- un capteur d'oscillations (2) relié avec le corps récepteur de chocs (1), destiné à détecter les signaux acoustiques et à les transformer en signaux électriques,
- une unité de traitement des signaux, aménagée pour traiter les signaux électriques de chaque capteur d'oscillations (2), pour déterminer la distribution granulométrique,
- le système de convoyage comprenant un réservoir (34) destiné à recevoir une dispersion comprenant les particules solides (24) et un milieu de dispersion liquide, ainsi qu'un outil agitateur (36) rotatif autour d'un axe de rotation,
- les moyens de commande comprenant un entraînement (38) pour l'outil agitateur (36) qui est aménagé pour générer un déplacement en rotation de la dispersion à vitesse constante, pour une quantité connue de particules solides et de milieu de dispersion liquide et
- le corps récepteur de chocs (1) étant placé avec un écart radial par rapport à l'axe de rotation de l'outil agitateur (36).

18. Dispositif, destiné à déterminer la distribution granulométrique de granulés composés de particules solides (24) présentant différentes granulométries, comprenant
- un système de convoyage destiné à déplacer les particules solides dans une direction de convoyage (13) dans un flux de convoyage,
- des moyens de commande, aménagés pour maintenir à un niveau constant l'énergie cinétique du flux de convoyage, l'énergie cinétique étant déterminée par la vitesse et la concentration ou la densité apparente des particules solides (24) des granulés,
- au moins un corps récepteur de chocs (1), placé dans le flux de convoyage à énergie cinétique constante, qui génère des signaux acoustiques sur la base de particules solides (24) en collision,
- un capteur d'oscillations (2) relié avec le corps récepteur de chocs (1), destiné à détecter les signaux acoustiques et à les transformer en signaux électriques,
- une unité de traitement des signaux, aménagée pour traiter les signaux électriques de chaque capteur d'oscillations (2), pour déterminer la distribution granulométrique,
- les moyens de commande comprenant un module de dispersion (26),
- le module de dispersion (26) comportant une chambre de mélange (26a), une entrée (26b) pour un milieu de dispersion gazeux dans la chambre de mélange (26a), une entrée pour les particules solides (26b) et une sortie (26d) pour la dispersion hors de la chambre de mélange (26a),
- la sortie (26d) étant orientée vers le corps récepteur de chocs (1) et
- l'entrée (26b) étant reliée avec une alimentation pour le milieu de dispersion, qui est aménagée pour alimenter le milieu de dispersion avec un débit volumétrique constant.

19. Dispositif selon la revendication 18, **caractérisé en ce que**
- sur l'entrée pour les particules solides (26b) du module de dispersion est raccordé un dispositif aspirant (27) pourvu d'un orifice d'entrée (27a),
- les moyens de commande comprennent en outre un creux en forme de rigole, destiné à recevoir des particules solides (24),
- le creux en forme de rigole et l'orifice d'entrée (27a) du dispositif aspirant (27) sont placés en étant mobiles l'un par rapport à l'autre dans la direction de l'extension longitudinale du creux et avec un écart constant entre l'orifice d'entrée (27a) et le creux et
- les moyens de commande comprennent en outre un entraînement (21), qui est aménagé pour créer le déplacement relatif entre le creux et l'orifice d'entrée (27a) à une vitesse constante.

20. Dispositif selon la revendication 18, **caractérisé en ce que**
- les moyens de commande comprennent un convoyeur continu, destiné à convoyer des particules solides (24),
- sur l'entrée (26c) pour les particules solides du module de dispersion (26) est raccordée une extrémité d'un conduit aspirant (27b),
- l'autre extrémité du conduit aspirant (27b) est raccordée sur une tête aspirante (27c),
- la tête aspirante (27c) étant placée en étant mobile par rapport au module de dispersion (26) maintenu de manière stationnaire, de sorte que la tête aspirante (27c) puisse suivre des fluctuations en hauteur du flux massique sur le convoyeur continu.

21. Dispositif selon la revendication 18, **caractérisé en ce que**
- l'entrée (26c) pour particules solides du module de dispersion (26) est reliée par l'intermédiaire d'un conduit (42) avec un réservoir (43), destiné à recevoir les particules solides (24),
- le réservoir (43) comporte une ouverture de remplissage (45) qui est reliée avec la sortie d'une pompe (46), qui côté aspiration est raccordée sur la tuyauterie (47) d'un convoyeur de flux (48) pneumatique, destiné au transport pneumatique de particules solides (24).

22. Dispositif selon la revendication 21, **caractérisé en ce que**
- le corps récepteur de chocs (1) est placé dans une enceinte (49) fermée de toutes parts et
- derrière le corps récepteur de chocs (1) dans la direction de convoyage (13) est placée dans l'enceinte (49) une sortie pour les particules solides (24), qui par l'intermédiaire d'un conduit de retour (51) muni d'un élément d'arrêt (50) est reliée avec le convoyeur de flux (48) pneumatique.

23. Dispositif, destiné à déterminer la distribution granulométrique de granulés composés de particules solides (24) présentant différentes granulométries, comprenant
- un système de convoyage, destiné à déplacer les particules solides dans une direction de convoyage (13) dans un flux de convoyage,
- des moyens de commande, aménagés pour maintenir à un niveau constant l'énergie cinétique du flux de convoyage, l'énergie cinétique étant déterminée par la vitesse et la concentration ou la densité apparente des particules solides (24) des granulés,
- au moins un corps récepteur de chocs (1), placé dans le flux de convoyage à énergie cinétique constante, qui génère des signaux acoustiques sur la base de particules solides (24) en collision,
- un capteur d'oscillations (2) relié avec le corps récepteur de chocs (1), destiné à détecter les signaux acoustiques et à les transformer en signaux électriques,
- une unité de traitement des signaux, aménagée pour traiter les signaux électriques de chaque capteur d'oscillations (2), pour déterminer la distribution granulométrique,
- le système de convoyage comprenant un convoyeur continu et les moyens de commande comprenant un racleur placé de manière stationnaire sur le châssis du convoyeur continu.

24. Dispositif, destiné à déterminer la distribution granulométrique de granulés composés de particules solides (24) présentant différentes granulométries, comprenant
- un système de convoyage destiné à déplacer les particules solides dans une direction de convoyage (13) dans un flux de convoyage,
- des moyens de commande, aménagés pour maintenir à un niveau constant l'énergie cinétique du flux de convoyage, l'énergie cinétique étant déterminée par la vitesse et la concentration ou la densité apparente des particules solides (24) des granulés,
- au moins un corps récepteur de chocs (1), placé dans le flux de convoyage à énergie cinétique constante, qui génère des signaux acoustiques sur la base de particules solides (24) en collision,
- un capteur d'oscillations (2) relié avec le corps récepteur de chocs (1), destiné à détecter les signaux acoustiques et à les transformer en signaux électriques,
- une unité de traitement des signaux, aménagée pour traiter les signaux électriques de chaque capteur d'oscillations (2), pour déterminer la distribution granulométrique,
- le système de convoyage comprenant un réservoir (53), destiné à recevoir une dispersion comprenant les particules solides (24) et un milieu de dispersion liquide, ainsi qu'un outil agitateur (54a),
- les moyens de commande comprenant un entraînement (54b) pour l'outil agitateur (54a), qui est aménagé pour créer un déplacement en rotation de la dispersion à vitesse constante,
- les moyens de commande comprenant une première pompe (4) susceptible d'être commandée, qui est aménagée pour le remplissage discontinu du réservoir (53) avec un volume constant de la dispersion,
- le corps récepteur de chocs (1) étant placé avec un écart radial par rapport à l'axe de rotation de l'outil agitateur (54a) dans le réservoir (53),
- le dispositif comportant une balance (58), destinée à détecter la masse de la dispersion chargée dans le réservoir (53) et
- l'unité de traitement des signaux étant configurée de sorte que dans le cadre du traitement des signaux, à partir de la masse de la dispersion détectée par la balance (58) soit déterminée la part des particules solides qui est proportionnelle à la concentration des particules solides dans la dispersion et que pour déterminer la distribution granulométrique, le traitement des signaux électriques de chaque capteur d'oscillations (2) s'effectue sous considération de la concentration.
